# FASCICULE DE BREVET EUROPEEN

(11) **EP 3 497 674 B1**
(45) Date de publication et mention de la délivrance du brevet: **07.10.2020**
(21) Numéro de dépôt: 17765228.6
(22) Date de dépôt: 08.08.2017
(51) Int. Cl.: G06F 3/01, A63F 13/47, H04N 21/854

(54) **SYSTÈME DE COMPOSITION OU DE MODIFICATION DE SÉQUENCES DE RÉALITÉ VIRTUELLE, PROCÉDÉ DE COMPOSITION ET SYSTÈME DE LECTURE DESDITES SÉQUENCES**
SYSTEM ZUR ERZEUGUNG ODER VERÄNDERUNG VON SEQUENZEN DER VIRTUELLEN REALITÄT, VERFAHREN ZUR ERZEUGUNG UND SYSTEM ZUM LESEN DIESER SEQUENZEN
SYSTEM FOR COMPOSING OR MODIFYING VIRTUAL REALITY SEQUENCES, METHOD OF COMPOSING AND SYSTEM FOR READING SAID SEQUENCES

(30) Priorité: 09.08.2016 FR 1657666
(43) Date de publication de la demande: 19.06.2019
(73) Titulaire: Atos Integration, 95870 Bezons (FR)
(72) Inventeur: MORIN, Gabriel, 95130 Franconville (FR); DUJARDIN, François, 37000 Tours (FR)
(74) Mandataire: A.P.I. Conseil
(86) Numéro de dépôt international: PCT/FR2017/052209
(87) Numéro de publication internationale: WO 2018/029426

(56) Documents cités:
- JAKUB FLOTYNSKI ET AL: "Building multi-platform 3D virtual museum exhibitions with Flex-VR", VIRTUAL SYSTEMS AND MULTIMEDIA (VSMM), 2012 18TH INTERNATIONAL CONFERENCE ON, IEEE, 2 septembre 2012 (2012-09-02), pages 391-398, XP032275749, DOI: 10.1109/VSMM.2012.6365950 ISBN: 978-1-4673-2564-6 & WALCZAK K ED - SU XU ET AL: "Flex-VR: Configurable 3D web applications", HUMAN SYSTEM INTERACTIONS, 2008 CONFERENCE ON, IEEE, PISCATAWAY, NJ, USA, 25 mai 2008 (2008-05-25), pages 135-140, XP031293502, ISBN: 978-1-4244-1542-7
- KIM YOUNG MI ET AL: "Development of Virtual Reality-Based Edutainment Contents for Children's English Education", INDIAN JOURNAL OF SCIENCE & TECHNOLOGY, vol. 9, no. 26, 22 juillet 2016 (2016-07-22), XP055413293, ISSN: 0974-6846, DOI: 10.17485/ijst/2016/v9i26/97411
- Anonymous: "EON Creator AVR For Industry To Bring Contextual Knowledge And Specialized Training Apps To Workers Around The World", , 3 mai 2016 (2016-05-03), XP055413257, Extrait de l'Internet: URL:https://www.eonreality.com/press-relea ses/eon-creator-avr-industry-bring-context ual-knowledge-specialized-training-apps-wo rkers-around-world/ [extrait le 2017-10-06] & Anonymous: "EON Creator AVR, New Virtual Reality (VR) and Augmented Reality (AR) Authoring Software, Empowers Consumers To Generate Their Own Content", , 8 avril 2015 (2015-04-08), XP055413269, Extrait de l'Internet: URL:https://www.eonreality.com/press-relea ses/eon-creator-avr-new-virtual-reality-vr -and-augmented-reality-ar-authoring-softwa re-empowers-consumers-to-generate-their-ow n-content/ [extrait le 2017-10-06]
- Tarik H: "Comment créer une application en réalité virtuelle ?", , 29 juin 2016 (2016-06-29), XP055317200, Extrait de l'Internet: URL:http://www.realite-virtuelle.com/creer -application-realite-virtuelle [extrait le 2016-11-08]
- Anonymous: "Scene Manager Manual Ancient Light Studios", , 19 juillet 2016 (2016-07-19), XP055317231, Extrait de l'Internet: URL:https://ancientlightstudios.com/scenem anager/documentation/manual.pdf [extrait le 2016-11-08]
- Anonymous: "How to embed and play a video on an object in Unity3d and Jibe | Be Cunning and Full of Tricks", , 8 avril 2013 (2013-04-08), XP055317249, Extrait de l'Internet: URL:https://becunningandfulloftricks.com/2 013/04/08/how-to-embed-and-play-a-movie-on -an-object-in-unity3d-and-jibe/ [extrait le 2016-11-08]
- ANDREAS BEHMEL ET AL: "[DEMO] MRI design review system: A mixed reality interactive design review system for architecture, serious games and engineering using game engines, standard software, a tablet computer and natural interfaces", 2014 IEEE INTERNATIONAL SYMPOSIUM ON MIXED AND AUGMENTED REALITY (ISMAR), 1 septembre 2014 (2014-09-01), pages 327-328, XP055316998, DOI: 10.1109/ISMAR.2014.6948472 ISBN: 978-1-4799-6184-9 & Rich O'brien: "Edddison brings 3D models to life | SketchUcation", , 26 décembre 2014 (2014-12-26), XP055316968, Extrait de l'Internet: URL:http://sketchucation.com/all-news/1296 -edddison-for-sketchup [extrait le 2016-11-07] & Anonymous: "edddison Tutorial How to design an interactive Unity 3D walk through with edddison version 1.6", , 31 mai 2015 (2015-05-31), XP055317012, Extrait de l'Internet: URL:http://edddison.com/wp-content/uploads /2015/05/How-to-design-an-inte
- RYAN A PAVLIK ET AL: "VR JuggLua: A framework for VR applications combining Lua, OpenSceneGraph, and VR Juggler", SOFTWARE ENGINEERING AND ARCHITECTURES FOR REALTIME INTERACTIVE SYSTEMS (SEARIS), 2012 5TH WORKSHOP ON, IEEE, 5 mars 2012 (2012-03-05), pages 29-35, XP032452364, DOI: 10.1109/SEARIS.2012.6231166 ISBN: 978-1-4673-1249-3
- JOHANNES BEHR ET AL: "X3DOM", 3D WEB TECHNOLOGY, ACM, 2 PENN PLAZA, SUITE 701 NEW YORK NY 10121-0701 USA, 16 juin 2009 (2009-06-16), pages 127-135, XP058132501, DOI: 10.1145/1559764.1559784 ISBN: 978-1-60558-432-4

## Description

L'invention concerne le domaine des expériences immersives de réalité virtuelle, et la création rapide et intuitive de séquences personnalisées d'expérience de réalité virtuelle ou augmentée. L'invention porte plus particulièrement sur un système de composition ou de modification de séquences de réalité virtuelle, un procédé permettant une composition ou une modification rapide d'une séquence d'expérience de réalité virtuelle mis en œuvre par ledit système et un système de lecture des séquences ainsi composées. L'objectif général est de permettre l'intégration rapide et aisée d'informations de façon à créer une séquence d'expérience de réalité virtuelle sans effort de programmation et ainsi la rendre accessible à la portée de tous.

### [Art antérieur]

La technique de réalité virtuelle se développe rapidement et touche de plus en plus de domaines tels que l'architecture, la communication, les jeux vidéo et l'apprentissage. La réalité virtuelle se réfère à un environnement conçu par ordinateur qui est capable de simuler la présence physique des utilisateurs dans le mode réel ou imaginaire. La réalité virtuelle peut se présenter sous la forme d'un seul lieu avec lequel l'utilisateur peut interagir, ou bien d'un ensemble de lieux, de façon à former une séquence de réalité virtuelle avec laquelle l'utilisateur peut interagir.

Aujourd'hui, il est généralement nécessaire, pour la conception et la définition d'une séquence de réalité virtuelle, de faire appel à des connaissances poussées dans des logiciels spécialisés tels que CATIA V5, Solidworks, Inventor, Sketchup, 3dsmax, Unreal Engine ou Unity3D. Ces solutions permettent de créer des séquences complexes d'expérience de réalité virtuelle. Néanmoins, elles nécessitent un long travail de programmation par des personnes ayant suivies des études spécialisées en programmation. En outre, la plupart des expériences de réalité virtuelle, créées par des équipes de programmeurs, sont structurellement figées. Ainsi, ces solutions ne permettent pas la création de séquences de réalité virtuelle par des personnes sans connaissances en programmation. Par exemple, l'article « Comment créer une application en réalité virtuelle » publié le 29 juin 2016 (URL:http://www.realite-virtuelle.com/creer-application-realite-virtuelle) décrit de façon globale la réalité virtuelle et la conception d'expérience de réalité virtuelle. Il propose notamment l'utilisation du logiciel Unity3D pour la réalisation d'expérience de réalité virtuelle mais ne décrit pas un système permettant à un non spécialiste de définir tous les éléments d'une séquence de réalité virtuelle. Cela est confirmé par le manuel « Scene Manager Manual » fonctionnant sous Unity3D publié le 19 juillet 2016 sur internet (ancientlightstudios.com/scenemanager/documentation/ manual.pdf) ou par l'article « How to embed and play a video on an abject in Unity3d and Jibe » publié le 8 avril 2013 sur internet (https://becunningandfulloftricks.com/2013/04/08/how-to-embed-and-play-a-movie-on-an-object-in-unity3d-and-jibe/) qui décrivent une partie des commandes de programmation nécessaires à la réalisation de séquences d'expérience de réalité virtuelle.

Il existe également dans l'état de l'art des solutions de visualisation de photos (e.g. Oculus Photos, disponible sur GearVR, dans laquelle on peut ajouter des photos en les copiant sur la carte SD du téléphone), de visualisation de vidéos (sur le même principe, Oculus Video sur GearVR). Ces applications ne permettent pas de personnaliser l'environnement dans lequel sont présentés ces médias. Elles ne permettent pas non plus de créer une visite composée de plusieurs lieux entre lesquels on peut naviguer.

Il existe d'autres solutions pour créer des expériences de réalité virtuelle relativement aisées à mettre en œuvre, telle que la solution décrite dans JAKUB FLOTYNSKI ET AL: "Building multi-platform 3D virtual museum exhibitions with Flex-VR" (VIRTUAL SYSTEMS AND MULTIMEDIA (VSMM), 2012 18TH INTERNATIONAL CONFERENCE ON, IEEE, 2 septembre 2012) ou dans « [DEMO] MRI Design Review System » (IEEE International Symposium on Mixed and Augmented Reality 2014, 10-12 september 2014).

Pourtant, la réalité virtuelle se développe rapidement et les dispositifs permettant d'accéder à ce nouveau média sont de plus en plus nombreux. Afin de favoriser son essor, il est nécessaire de disposer de systèmes et de méthodes associés permettant à un utilisateur sans connaissances poussées en programmation de générer une séquence de réalité virtuelle pouvant satisfaire ses besoins. En effet, un utilisateur pourrait souhaiter personnaliser une séquence de réalité virtuelle de façon à y insérer des expériences complémentaires et cela sans avoir à recoder l'application gérant cette séquence. Or, il n'existe pas de solution capables, sans avoir recours à la programmation, d'une part d'évoluer en terme de structure en fonction des désirs de l'auteur et d'autre part d'intégrer des contenus, contenants ou transitions provenant de différentes origines et notamment des ressources de l'auteur.

Ainsi, il existe un besoin pour de nouveaux systèmes de composition de séquence d'expérience de réalité virtuelle capables de répondre aux problèmes engendrés par les systèmes existants.

L'invention a pour but de remédier aux inconvénients de l'art antérieur. Elle permet notamment la mise en œuvre d'un service d'édition de visite en réalité virtuelle permettant à un non spécialiste de définir tous les éléments de la visite (lieux, liens de navigation, media consultables et leur positionnement dans chaque lieu) via une interface ne nécessitant pas de programmation de la part de l'auteur.

En particulier, l'invention a pour but de proposer un système de composition d'une séquence de réalité virtuelle, ledit système pouvant être mis en œuvre même en l'absence de connaissance en programmation, étant rapide, simple et avec un nombre réduit d'étapes. Ce système, basé sur un fichier ou un ensemble de fichiers de configuration a l'avantage de pouvoir supporter l'ajout de modules d'expériences, pour enrichir la visite et redéfinir les règles d'interactions proposées pour la navigation et la consultation de media sans avoir à reprogrammer l'ensemble du produit. Ainsi, il est possible également à partir d'une séquence de base de venir y greffer des contenus de tous types et cela sans connaissances en programmation.

L'invention a en outre pour but de proposer un procédé de composition ou de modification d'une séquence d'expérience de réalité virtuelle permettant de faire évoluer la séquence, de personnaliser l'environnement dans lequel sont présentés les médias et notamment de créer une visite composée de plusieurs lieux dans lesquels il est possible de naviguer.

En outre, l'invention propose un système de lecture qui a l'avantage de reposer sur un fichier ou un ensemble de fichiers de configuration léger et donc facilement transférable. Ainsi, il peut être envisagé de transmettre la séquence de réalité virtuelle sous la forme d'un fichier de configuration associé à des fichiers médias sur un poste fixe, une tablette, un téléphone à écran tactile ou encore un casque de réalité virtuelle.

Ainsi, la présente invention apporte une approche différente des approches classiques de réalité virtuelle en proposant un niveau très élevé de personnalisation, de navigation et de conception.

### [Brève description de l'invention]

A cet effet, l'invention porte sur un système de composition ou de modification d'une séquence d'expérience de réalité virtuelle, ladite séquence d'expérience de réalité virtuelle comprenant d'une part plusieurs lieux liés entre eux, une liaison entre deux lieux étant opérée par un nœud de navigation, et d'autre part des contenus média liés aux lieux, une liaison entre un lieu et un contenu média étant opérée par des nœuds de média, ledit système comprenant :
- un module de composition de séquence d'expérience de réalité virtuelle,
- un fichier de configuration ou un ensemble de fichiers de configuration comprenant :
   ∘ au moins une scène caractérisée par des champs primaires de scène, lesdits champs primaires de scène comprenant un identifiant unique de ladite scène et un moyen d'accès à un fichier média d'environnement représentant un lieu,
   ∘ au moins un nœud de navigation caractérisé par des champs primaires de navigation, lesdits champs primaires de navigation comprenant un identifiant unique d'une scène de départ, un identifiant unique d'une scène d'arrivée, une position du nœud de navigation dans le lieu de la scène de départ selon un repère sphérique (O,x,y,z) et une règle de transition,
   ∘ au moins un nœud de média caractérisé par des champs primaires de média, lesdits champs primaires de média comprenant un identifiant unique de la scène de laquelle dépend le nœud de média, une position du nœud de média dans le lieu de la scène comprenant le nœud de média selon un repère sphérique (O,x,y,z), un chemin d'accès à un fichier média de contenu et une règle de contrôle, et
- un dispositif comportant des fichiers de média,
lesdits champs primaires étant associés à des éléments de données définissant une valeur de ces champs primaires,
ledit module de composition de séquence d'expérience de réalité virtuelle comprenant un dispositif d'enregistrement muni de règles lui permettant d'enregistrer les éléments de données dans le fichier de configuration ou l'ensemble de fichiers de configuration, lesdits éléments de donnée définissant au moins partiellement la séquence d'expérience de réalité virtuelle composée ou modifiée.

Selon d'autres caractéristiques optionnelles du système de composition ou de modification :
- il comprend un module d'affichage. Ce module permet à l'auteur lors de la modification de visualiser rapidement la séquence d'expérience de réalité virtuelle en cours d'élaboration sans avoir à attendre la fin de la composition ou modification.
- le ou les nœuds de navigation sont caractérisés en outre par au moins un champ secondaire de navigation, ledit au moins un champ secondaire de navigation pouvant être sélectionné parmi :
   ∘ un identifiant unique du nœud de navigation,
   ∘ un texte, donnant des informations relatives au nœud de navigation, et
   ∘ un moyen d'accès aux données relatives à la vue d'arrivée ;
Ces champs secondaires permettent notamment de mieux caractériser les nœuds de navigation et de créer une expérience plus rapidement.
- le ou les nœuds de média sont caractérisés en outre par au moins un champ secondaire de média, ledit champ secondaire de média pouvant être sélectionné parmi :
   ∘ un identifiant unique du nœud de média,
   ∘ une valeur de distance, et
   ∘ une valeur permettant de contrôler le temps s'écoulant avant l'exécution du média.
Ces champs secondaires permettent notamment de mieux caractériser les nœuds de média de façon à ajouter pour l'auteur des possibilités de paramétrage et de créer une expérience plus immersive.
- l'élément de donnée de la règle de contrôle d'au moins un nœud de média est sélectionné parmi un diaporama ou une grille de contenu.
- l'élément de donnée de la règle de transition d'au moins un nœud de navigation est sélectionné parmi une coupe, un fondu, un volet, un rideau, une transition animée ou une transition incluant la lecture d'une vidéo.
- le ou les fichiers de configuration ont une taille inférieure à 200 kilo-octets. Un des avantages de l'invention est de reposer sur des systèmes de fichiers d'une part faciles à modifier et d'autre part légers, ne nécessitants que peu de ressources.
- il comprend un ensemble de fichier de configuration dont au moins un fichier est un fichier de configuration organisateur comprenant une liste de l'ensemble des fichiers de configuration nécessaires à la personnalisation de la séquence d'expérience de réalité virtuelle. Cela permet de faciliter la modification de grandes séquences d'expérience de réalité virtuelle et d'offrir la possibilité à plusieurs auteurs de modifier simultanément la séquence.

Selon un autre aspect, l'invention porte sur un procédé de composition ou de modification d'une séquence d'expérience de réalité virtuelle mis en œuvre par le système décrit précédemment, ladite séquence d'expérience de réalité virtuelle comprenant d'une part des lieux liés entre eux, une liaison entre deux lieux étant opérée par un nœud de navigation, et d'autre part des contenus média liés aux lieux, une liaison entre un lieu et un contenu média étant opérée par des nœuds de média, ledit procédé comprenant :
- une étape de création d'une connexion, dans un module de composition de séquence d'expérience de réalité virtuelle, entre un dispositif de contrôle apte à interagir avec un auteur et un dispositif d'enregistrement,
- une étape de chargement par le dispositif d'enregistrement, d'un fichier ou d'un ensemble de fichiers de configuration, ledit fichier ou ensemble de fichiers de configuration comprenant :
   ∘ au moins une scène caractérisée par des champs primaires de scène, lesdits champs primaires de scène comprenant un identifiant unique de ladite scène et un moyen d'accès à un fichier média d'environnement représentant un lieu,
   ∘ au moins un nœud de navigation caractérisé par des champs primaires de navigation, lesdits champs primaires de navigation comprenant un identifiant unique d'une scène de départ, un identifiant unique d'une scène d'arrivée, une position du nœud de navigation dans le lieu de la scène de départ selon un repère sphérique (O,x,y,z) et une règle de transition, et
   ∘ au moins un nœud de média caractérisé par des champs primaires de média, lesdits champs primaires de média comprenant un identifiant unique de la scène de laquelle dépend le nœud de média, une position du nœud de média dans le lieu de la scène comprenant le nœud de média selon un repère sphérique (O,x,y,z), un chemin d'accès à un fichier média de contenu et une règle de contrôle,
   lesdits champs primaires pouvant être associés à des éléments de données définissant la valeur de ces champs primaire,
   - une étape d'affichage par un module d'affichage, d'une interface de création configurée pour recevoir et afficher des informations du module de composition de séquence d'expérience de réalité virtuelle,
   - une étape de création, par le dispositif d'enregistrement de séquence d'expérience de réalité virtuelle, d'au moins un élément de donnée associé à un marqueur primaire de scène, de navigation et/ou de média, l'élément de donnée associé à un marqueur primaire permettant de définir au moins partiellement la séquence d'expérience de réalité virtuelle, et
   - une étape d'enregistrement dudit élément de donnée dans le fichier ou l'ensemble de fichiers de configuration, par le dispositif d'enregistrement.

Selon un autre aspect, l'invention porte sur un système de lecture d'une expérience de réalité virtuelle susceptible d'être obtenue par le procédé décrit précédemment, comprenant un dispositif d'affichage d'une séquence d'expérience de réalité virtuelle, ladite expérience de réalité virtuelle comprenant d'une part des lieux liés entre eux, une liaison entre deux lieux étant opérée par un nœud de navigation, et d'autre part des contenus média liés aux lieux, une liaison entre un lieu et un contenu média étant opérée par des nœuds de média, ledit dispositif comprenant :
- un module de lecture d'expérience de réalité virtuelle,
- un module d'affichage,
- un fichier de configuration ou un ensemble de fichiers de configuration comprenant :
   ∘ au moins une scène caractérisée par des champs primaires de scène, lesdits champs primaires de scène comprenant un identifiant unique de ladite scène et un moyen d'accès à un fichier média d'environnement représentant un lieu,
   ∘ au moins un nœud de navigation caractérisé par des champs primaires de navigation, lesdits champs primaires de navigation comprenant un identifiant unique d'une scène de départ, un identifiant unique d'une scène d'arrivée, une position du nœud de navigation dans le lieu de la scène de départ selon un repère sphérique (O,x,y,z) et une règle de transition, et
   ∘ au moins un nœud de média caractérisé par des champs primaires de média, lesdits champs primaires de média comprenant un identifiant unique de la scène de laquelle dépend le nœud de média, une position du nœud de média dans le lieu de la scène comprenant le nœud de média selon un repère sphérique (O,x,y,z), un chemin d'accès à un fichier média de contenu et une règle de contrôle,
- un dispositif comportant un ensemble de fichiers de média,
lesdits champs primaires étant associés à des éléments de données définissant la valeur de ces champs primaire,
ledit module de lecture de séquence d'expérience de réalité virtuelle comprenant un moyen d'accès à des éléments de données, un dispositif d'acquisition et de traitement des éléments de données et un module de transmission au module d'affichage de la séquence de réalité virtuelle.

Selon d'autres caractéristiques optionnelles du système de lecture d'une expérience de réalité virtuelle :
- le système de lecture comprend un module d'identification des utilisateurs du système de lecture de la séquence d'expérience de réalité virtuelle apte à autoriser la lecture multiutilisateurs de la séquence d'expérience de réalité virtuelle. Cela permet à plusieurs utilisateurs de visiter à un même moment une même séquence d'expérience de réalité virtuelle. Dans ce cas, le système peut être configuré de façon à ce qu'un utilisateur, faisant office de guide, dispose d'autorisations lui permettant de déterminer la scène visualisée par chacun des utilisateurs et possiblement de forcer un utilisateur à changer de scène de façon à ce que la lecture de la séquence d'expérience de réalité virtuelle se fasse de façon coordonnées entre tous les utilisateurs.
- il est configuré de façon à ce que les actions disponibles, aux utilisateurs du système de lecture, soient représentées par des éléments visuels flottants dans un lieu que l'utilisateur est en train de visiter, lesdits des éléments visuels étant placés dans le lieu, sur la base des informations contenues dans le fichier ou de l'ensemble de fichiers de configuration. Les éléments visuels sont dits flottants car ils sont généralement ancrés dans un environnement en 3D.
- il est configuré de façon à ce que lorsque le regard de l'utilisateur est proche d'un nœud, un curseur apparaît pour l'aider à fixer précisément le point en question. Le fait que l'utilisateur ne soit informé de l'existence d'un nœud que lorsque son regard est proche permet de proposer une expérience plus immersive.

- il est configuré de façon à ce que lorsque le regard de l'utilisateur est proche d'un nœud, un indicateur de temps apparaît pour indiquer à l'utilisateur l'imminence du déclenchement de l'action. La présence d'un indicateur de temps permet à l'utilisateur d'annuler l'accès à un nœud en changeant la position de son regard, par exemple en positionnant son regard à distance du nœud (e.g. à une distance représentant plus de 10 % de la longueur du champ de vision).
- il est configuré de façon à ce qu'un pointeur représentant la position du regard de l'utilisateur ne soit visible qu'à partir du moment où le pointeur est à une distance de l'objet le plus proche représentant moins de 10 % de la longueur du champ de vision.
- il comporte un module d'affichage sur appareil mobile, ledit module d'affichage étant apte à afficher au moins un parcours recommandé.

D'autres avantages et caractéristiques de l'invention apparaitront à la lecture de la description suivante donnée à titre d'exemple illustratif et non limitatif, en référence aux Figures annexées qui représentent :
- la Figure 1, représente le graphique de dépendance d'une séquence d'expérience de réalité virtuelle selon l'invention.
- la Figure 2, représente un schéma de mise en œuvre du système de composition ou de modification d'une séquence d'expérience de réalité virtuelle selon l'invention.
- la Figure 3, représente le schéma d'un système de composition ou de modification d'une séquence d'expérience de réalité virtuelle selon l'invention intégré dans un système plus large, comme un système d'information type gestion de relation client ou un progiciel de gestion intégré, manipulé à travers un portail de configuration, de paramétrage et de distribution cloud.
- la Figure 4, représente un enchainement d'étape composant une variante du procédé de composition selon l'invention.
- la Figure 5, représente un schéma de mise en œuvre du système de lecture d'une séquence d'expérience de réalité virtuelle selon l'invention.
- la Figure 6, représente le champ de vision de l'utilisateur lorsque ce dernier ne pointe pas son regard (représenté par « X »), et donc le centre de vision, à proximité d'un nœud (A) ; lorsque l'utilisateur pointe son regard à proximité d'un nœud (B) et lorsqu'un nœud a été validé par un regard prolongé de l'utilisateur (C).
- la Figure 7, représente une vue schématisé d'un lieu comprenant une porte associée à un nœud de navigation représenté par une étoile (coordonnées : 80°, 50°, 0°) et un écran d'ordinateur associé à un nœud de média représenté par un cercle (coordonnées : 40°, 30°, 0°) ainsi qu'un repère sphérique.

### [Description de l'invention]

L'expression « séquence d'expérience de réalité virtuelle » au sens de l'invention correspond à un environnement conçu par ordinateur qui est capable de simuler la présence physique des utilisateurs dans le mode réel ou imaginaire. L'environnement se présente sous la forme d'un ensemble de lieux avec lesquels l'utilisateur peut interagir.

On entend par « auteur », une personne utilisant le dispositif ou le procédé selon l'invention pour créer ou modifier une séquence d'expérience de réalité virtuelle et par utilisateur, une personne utilisant le dispositif ou le procédé selon l'invention pour expérimenter / utiliser une séquence d'expérience de réalité virtuelle.

On entend par « un accès 313 à un fichier média », les informations nécessaires pour accéder à un fichier media sur un support de stockage local, ou en le téléchargeant ou le streamant, depuis un stockage distant, via un protocole web ou un accès à une base de données. Il s'agit en général d'un chemin d'accès au fichier media précédé éventuellement d'un protocole d'accès (comme http://, file://).

On entend par « fichier de configuration » au sens de l'invention, un fichier comprenant les informations nécessaires à la conception d'une séquence d'expérience de réalité virtuelle. Le fichier est accessible aux modules de lecture et de composition de façon à concevoir la séquence d'expérience de réalité virtuelle

Dans la suite de la description, on entend par « appareil mobile » un appareil pouvant être facilement déplacé et pouvant être utilisé pour visualiser une séquence d'expérience en réalité virtuelle. Généralement il pèse moins de 2 kilogrammes, de préférence moins d'un kilogramme et de façon encore plus préférée moins de 500 grammes. Par exemple, il peut être sélectionné parmi un ordinateur portable, un téléphone portable, une tablette ou un casque de réalité virtuelle autonome ou filaire.

Dans la suite de la description, on entend par « graphique de dépendance » une représentation schématique d'une séquence de réalité virtuelle permettant de visualiser les interactions entre les lieux ainsi qu'entre les lieux et les contenus.

Dans la suite de la description on entend par « nœud de navigation » un élément indiquant le point de passage d'un point à un autre dans un scénario d'usage et par nœud de média un élément indiquant la présence d'un média défini à cet emplacement. Ces nœuds peuvent prendre la forme de données et/ou d'instructions pouvant être opérées par le module de composition selon l'invention.

Dans la suite de la description, les mêmes références sont utilisées pour désigner les mêmes éléments.

Le système selon l'invention permet de réaliser une composition ou modification d'une séquence d'expérience de réalité virtuelle et avantageusement une séquence d'expérience de réalité virtuelle personnalisée sans la nécessité pour l'auteur de disposer de connaissances en codage.

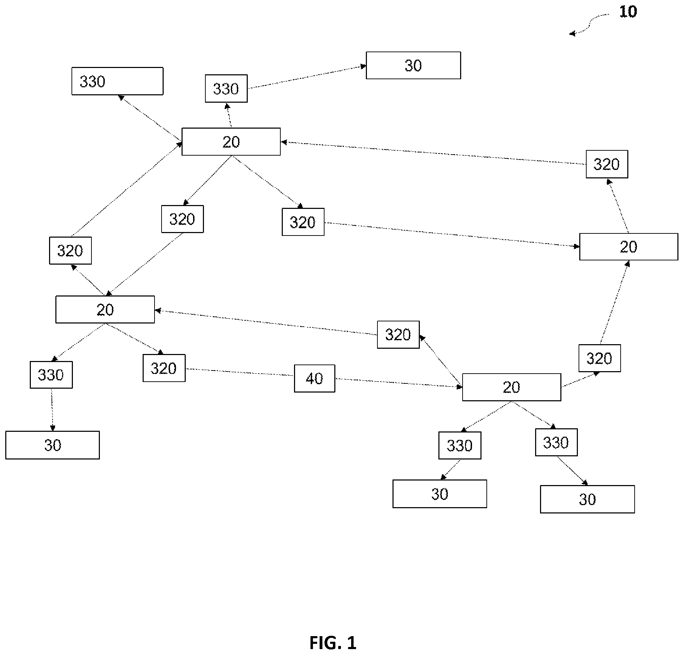

La figure 1 schématise une séquence d'expérience de réalité virtuelle 10 selon l'invention. Cette séquence comprend d'une part des lieux 20 liés entre eux, une liaison entre deux lieux 20 étant opérée par un nœud de navigation 320, et d'autre part des contenus média 30 liés aux lieux 20, une liaison entre un lieu 20 et un contenu média 30 étant opérée par des nœuds de média 330.

Les lieux 20 peuvent être des représentations de lieux réels ou fictifs par des images 2D, 3D, panoramiques, 360 ou 360 stéréo ou bien des modélisations en 3D de lieux. De façon préférée, les lieux 20 sont des représentations de lieux réels par des images 2D, 3D, panoramiques, 360 ou 360 stéréo ou bien des modélisations en 3D de lieux. Les lieux sont liés entre eux par des nœuds de navigation 320 et un utilisateur expérimentant une séquence d'expérience de réalité virtuelle 10 à la possibilité de naviguer entre différents lieux 20 en interagissant avec des nœuds de navigation 320. Un lieu 20 peut être lié à plusieurs autres lieux 20. Généralement, excepté pour le lieu initial 21, les lieux comprennent au moins un nœud de navigation 320 permettant de revenir au lieu 20 précédent. Ainsi, de façon préférée dans une séquence d'expérience de réalité virtuelle 10 selon l'invention, chaque lieu 20 comprend au moins un nœud de navigation 320. De plus, une séquence d'expérience de réalité virtuelle 10 selon l'invention comprend généralement au moins deux lieux 20, de préférence au moins quatre lieux 20 et de façon encore plus préférée au moins six lieux 20. De préférence, chaque lieu 20 est représenté par une image 360 stéréo ou par une scène modélisée en 3D.

Les lieux 20 peuvent également comprendre des nœuds de média 330. Ces nœuds de média 330, une fois activés par un utilisateur permettent d'accéder à au moins un contenu média 30. Les contenues média 30 peuvent être des photos, des diaporamas, des vidéos, des éléments sonores comme de la voix ou un son d'ambiance. De préférence les contenues média 30 sont des photos ou des vidéos.

De préférence, la séquence d'expérience de réalité virtuelle 10 est représentative d'un lieu réel et peut s'apparenter à une visite.

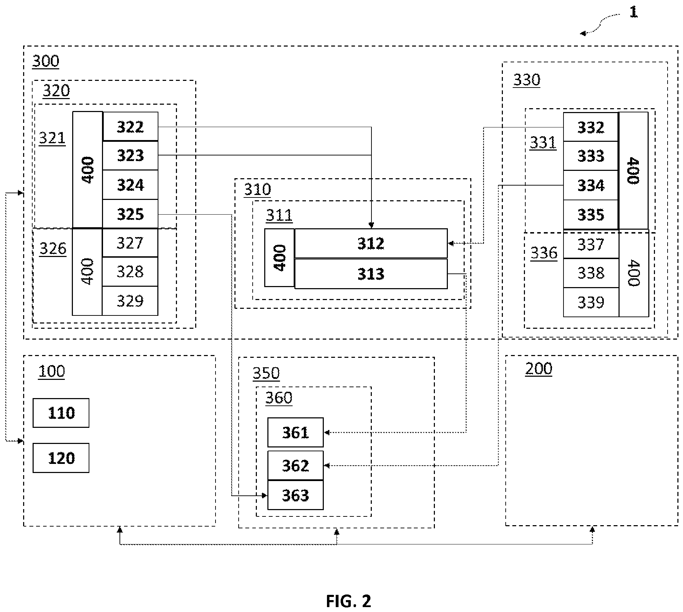

La Figure 2 schématise un exemple de système de composition ou de modification 1 d'une séquence d'expérience de réalité virtuelle 10 selon l'invention. Le système permet de naviguer de zones virtuelles (scènes, panoramas...) en contenus, de zones virtuelles en zones virtuelles et de contenus en contenus, chaque contenu pouvant devenir un contenant, et réciproquement. En effet, lorsqu'un nœud de media 330 contient plusieurs media, l'utilisateur peut les consulter par exemple dans l'ordre (e.g. au moyen d'un diaporama incluant des fonctions « précèdent » et « suivant »), ou encore au moyen d'une grille de vignettes sélectionnables. De façon particulière, des lieux 20 peuvent également être navigables sous forme de diaporama à travers des nœuds de navigation 320.

Le système de composition ou de modification 1 selon l'invention comprend :
- un module de composition 100 de séquence d'expérience de réalité virtuelle 20,
- un fichier de configuration ou un ensemble de fichiers de configuration 300, comportant au moins une scène 310, au moins un nœud de navigation 320 et au moins un nœud de média 330 et
- un module d'affichage 200
- un dispositif 350 comportant des fichiers de média 360.

Le module de composition 100 de séquence d'expérience de réalité virtuelle 20 comporte un dispositif d'enregistrement 110 qui est muni de règle lui permettant d'enregistrer, dans le fichier ou l'ensemble de fichiers de configuration 300, les éléments de données 400 définissant les valeur de champs primaires et/ou secondaires et d'y accéder.

Comme cela est montré dans la figure 2, le module de composition 100 est apte à interagir avec le fichier ou l'ensemble de fichiers de configuration 300, le dispositif de média 350 et un module d'affichage 200. Le module de composition 100 pourra notamment recevoir des données depuis ces différents modules et leurs transmettre des données.

En outre, ce module de composition 100 peut également comprendre un dispositif de contrôle 120, ce dernier étant apte à recevoir les instructions d'un auteur et pouvant être physiquement distinct du module d'enregistrement 110.

Dans un mode de réalisation, le module d'enregistrement 110 comprend une application 111 pouvant être codée en langage de programmation Unity et définissant notamment les règles lui permettant d'enregistrer, dans le fichier ou l'ensemble de fichiers de configuration 300, les éléments de données 400 définissant les valeurs de champs primaires et/ ou secondaires.

En outre, le module de composition 100 peut comporter un portail web ou une application mobile permettant de choisir et définir les contenants, contenus, et les interactions entre ces éléments à travers une succession de clics par le ou les auteurs. Les technologies utilisées sont de préférences sélectionnées parmi : PHP, JavaScript, HTML et CSS.

Le fichier de configuration ou l'ensemble de fichiers de configuration 300 selon l'invention comprend au moins une scène 310, au moins un nœud de navigation 320, et au moins un nœud de média 330. Ce fichier ou cet ensemble de fichiers de configuration 300 correspond à un aspect particulièrement avantageux de l'invention. En effet, c'est au moins en partie l'existence de ce fichier ou de cet ensemble de fichier 300 qui va permettre au système 1 selon l'invention de fournir à l'auteur la possibilité de créer ou de modifier rapidement, et sans connaissance en programmation, la séquence d'expérience de réalité virtuelle 10.

Par ailleurs, ce type de fichier présente une architecture qui est divisée en trois parties principales : scènes, nœuds de navigation, nœuds de média. Cela permet au module de composition 100 d'accéder rapidement à l'information recherchée.

De même, l'enregistrement de ces informations sous la forme d'un fichier ou d'un ensemble de fichiers de configuration 300 indépendants permet de conserver un module de composition 100 stable, comprenant notamment une application d'enregistrement 111 qu'il n'est pas nécessaire de modifier pour composer ou modifier une séquence d'expérience de réalité virtuelle. Cela à l'avantage d'une part de permettant de maitriser les coûts de développement et d'autre part réaliser de nouvelles séquences en l'absence de connaissance en programmation.

Comme cela est évoqué ci-dessus et comme présenté dans la figure 2, le fichier ou l'ensemble de fichier 300 comprend au moins une scène 310 caractérisée par des champs primaires de scène 311.

Les champs primaires de scène 311 comprennent un identifiant unique 312 de ladite scène. Cet identifiant unique 312 ne sera attribué que pour une seule scène et peut être par exemple une séquence de lettre, de chiffre ou une combinaison de lettre et de chiffres. Ainsi, il va permettre d'identifier de façon certaine une scène.

Les champs primaires de scène 311 comprennent également un accès 313 à un fichier média d'environnement 361 représentant un lieu 20. C'est ce fichier média d'environnement 361 qui servira de base au module d'affichage 200, via un module de lecture 600, pour la représentation de la vue. Le fichier média d'environnement 361 peut par exemple être du jpeg.

Ces champs primaires de scène 311 sont associés à des éléments de données 400 qui définissent la valeur de ces champs primaires de scène 311. Le module de composition 100 est apte, via le dispositif d'enregistrement, à générer ou modifier le(s) fichier(s) de configuration 300 et à modifier les éléments de données 400 associés à ces champs.

La scène 310 peut être caractérisé par d'autres champs, dit champs secondaires qui pourront détailler les caractéristiques de la dite scène. Par exemple, des champs secondaires peuvent être sélectionnés parmi des éléments constituants des métadonnées décrivant ladite caractéristique.

Comme cela est présenté dans la figure 2, le fichier ou l'ensemble de fichier 300 comprend au moins un nœud de navigation 320 caractérisé par des champs primaires de navigation 321.

Les champs primaires de navigation 321 comprennent un identifiant unique d'une scène de départ 322, un identifiant unique d'une scène d'arrivée 323, une position du nœud de navigation 324 dans le lieu de la scène de départ selon un repère sphérique (O,x,y,z) et une règle de transition 325.

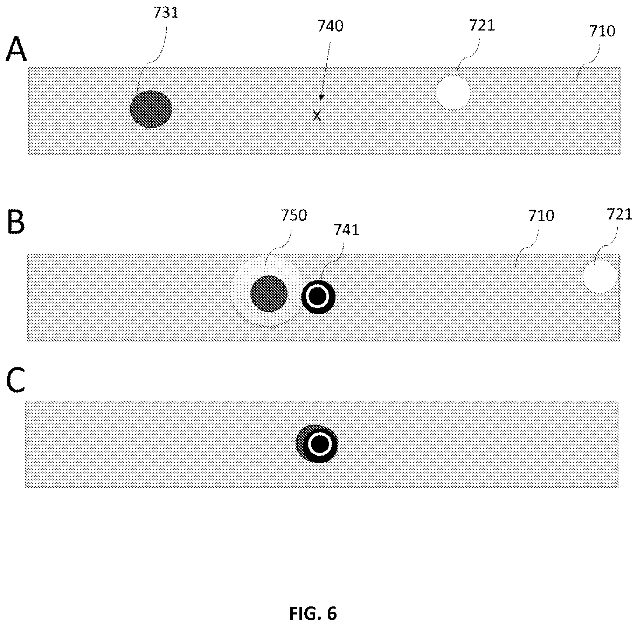

L'identifiant unique d'une scène de départ 322 permet de définir la position de la représentation du nœud de navigation 320 dans un lieu 20 au sein de la séquence d'expérience de réalité virtuelle 10. Cette position est ensuite détaillée par le champ primaire : « position du nœud de navigation dans le lieu de la scène de départ selon un repère sphérique (O,x,y,z) 324 » qui permet de positionner précisément la représentation du nœud de navigation dans le lieu de départ. Le repère sphérique peut être positionné comme présenté dans la figure 6 où il présente une valeur z=0 car le lieu n'est pas une modélisation en trois dimensions mais une photo panoramique. La position du nœud de navigation dans le lieu de la scène de départ est exprimée en coordonnée sphérique ce qui permet de positionner précisément la représentation du nœud de navigation dans le lieu de départ, autour du point de vue de l'utilisateur. L'identifiant unique d'une scène d'arrivée 323 permet à un module de composition 100 ou à un module de lecture 600 de déterminer quelle sera l'action à réaliser lorsque le nœud de navigation 320 sera actionné, c'est-à-dire quel sera le lieu d'arrivée 22 qui remplacera le lieu de départ 21.

La transition entre le lieu de départ 21 et le lieu d'arrivée 22 est gérée par une règle de transition 325. Ce champ primaire de navigation, « règle de transition 325 », permet de définir le visuel de transition 325 qui sera expérimenté par l'utilisateur. La valeur de cette règle de transition, telle que définie par les éléments de données 400) peut être sélectionné parmi une coupe, un fondu, un volet, un rideau, une transition animée ou une transition incluant la lecture d'une vidéo. De préférence, au moins une règle de transition comporte un élément de donnée de type « Fichier média de transition ». En effet, lors de l'utilisation d'un fichier média de transition 363, le passage de la scène de départ à la scène d'arrivée peut comporter une séquence vidéo et/ou une séquence sonore et ainsi se comporter comme une transition média 40. Ainsi, de façon avantageuse, la liaison entre deux lieux 20 peut comprendre une règle de transition 40 associée à un contenu média de transition 363 tel que cela est schématisé dans la figure 1.

Le ou les nœuds de navigation 320 selon l'invention peuvent également comporter au moins un champ secondaire de navigation 326. Ces champs secondaires pourront détailler les caractéristiques du nœud de navigation 320. Par exemple, des champs secondaires peuvent être sélectionnés parmi :
- un identifiant unique du nœud de navigation 327, comme l'identifiant unique de scène, cet identifiant unique permet au module de composition 100 de rapidement identifié un nœud de navigation 320 au sein du ou des fichiers de configuration 300 de la séquence d'expérience de réalité virtuelle 10,
- un texte 328, pouvant donner des informations relatives au nœud de navigation 320 ou à la vue d'arrivée et pouvant être affiché en relation avec le nœud de navigation, et
- un moyen d'accès aux données relatives à la vue d'arrivée 329.

Le nœud de média 330 est caractérisé par des champs primaires de média 331. Les champs primaires de média 331 comprennent un identifiant unique de la scène de laquelle dépend le nœud de média 332, une position du nœud de média dans le lieu de la scène comprenant le nœud de média selon un repère sphérique (O,x,y,z) 333, un chemin d'accès 334 à un fichier média de contenu 362 et une règle de contrôle 335.

Généralement, le nœud de média 330 peut permettre d'accéder à une image, une bande sonore ou d'une vidéo. Néanmoins, le nœud de média 330 peut également permettre, grâce au champ primaire de règle de contrôle 335, l'accès en une seule action à une pluralité de média tels qu'un diaporama ou une grille de contenus. Ainsi, l'élément de donnée 400 de la règle de contrôle 335 d'au moins un nœud de média 330 est sélectionné parmi un diaporama ou une grille de contenu.

Le ou les nœuds de média 330 selon l'invention peuvent également comporter au moins un champ secondaire de navigation 336. Ces champs secondaires pourront détailler les caractéristiques du nœud de navigation. Par exemple, des champs secondaires de média 336 peuvent être sélectionnés parmi :
- un identifiant unique du nœud de média 337,
- une valeur de distance 338, permettant de modifier l'affichage du média de contenu et ainsi de créer une impression de profondeur, et
- une valeur permettant de contrôler le temps s'écoulant avant l'exécution du média 339.

En plus d'être facilement modifiable, le système selon l'invention est de préférence léger afin de permettre un transfert rapide et une utilisation sur une grande diversité d'appareil, de préférence des appareils mobiles. Grace à l'architecture du système 1 proposé par les inventeurs comportant un fichier ou ensemble de fichier 300, un module de composition 100 et un dispositif de média 350, il est possible de réduire la taille attribué au(x) fichier(s) de configuration 300.

Ainsi, de façon avantageuse, le fichier ou l'ensemble de fichier 300 peut présenter une taille inférieure à 200 ou à 100 kilo-octets, de préférence inférieure à 50 ko, de façon encore plus préférée inférieure à 30 ko. Lorsque l'invention comporte un ensemble de fichier de configuration et non un fichier de configuration unique alors la taille ci-dessus correspond à la somme de la taille des fichiers de configuration formant l'ensemble 300.

De façon préférée, le système 1 comprend un ensemble de fichier de configuration et non un fichier de configuration unique. En effet, la présence de plusieurs fichiers de configuration augmente encore la modularité de la séquence d'expérience de réalité virtuelle selon l'invention. De plus, cela donne la possibilité de travailler en parallèle sur plusieurs aspects différents des séquences (scène, nœud de média...) ou de travailler en parallèle sur plusieurs sous-ensembles de lieux dont les caractéristiques sont enregistrées dans des fichiers de configuration différents.

De façon avantageuse, l'ensemble de fichier peut comprendre au moins un fichier de configuration dit « organisateur » 370 comprenant une liste de l'ensemble des fichiers de configuration nécessaires à la personnalisation de l'expérience de réalité virtuelle. Le système est apte à charger depuis ce fichier les informations d'accès au(x) fichier(s) nécessaire(s) à la séquence d'expérience de réalité virtuelle 10. Ainsi, la structure unique du système de composition 1 ou de modification de séquence d'expérience de réalité virtuelle 10 selon l'invention permet de facilement ajouter des expériences complémentaires à la séquence existante, pour cela il suffit de créer un ou plusieurs fichiers de configuration dédiés à la sous-séquence à ajouter et de modifier le fichier de configuration dit organisateur 370. La présente invention donne ainsi la possibilité d'enrichir la visite et de redéfinir les règles d'interactions proposées pour la navigation et la consultation des media.

L'ensemble de fichier de configuration 300 peut également être découpé comme suit :
- Un fichier de configuration dit organisateur 370,
- Un fichier de configuration dit de scène, comprenant les scènes, les nœuds de navigation ainsi que pour les nœuds de média 330, les champs d'identifiant unique du nœud de média 337, d'identifiant unique de la scène de laquelle dépend le nœud de média 332, et de position du nœud de média dans le lieu de la scène comprenant le nœud de média selon un repère sphérique (O,x,y,z) 333,
- Un fichier de configuration dit de média, comprenant les champs relatifs au chemin d'accès 334 à un fichier média de contenu 362, à une règle de contrôle 335, à un identifiant unique du nœud de média 337, à une valeur de distance 338, et à une valeur définissant l'exécution du média 339.

L'existence dans l'ensemble de fichiers de configuration 300 d'un fichier de configuration dit de scène, comportant toutes les informations relatives aux lieux 20 et notamment aux positions des nœuds présents dans ces lieux 20 couplé à un fichier de configuration définissant les informations de média, permet de de proposer une solution de modification plus aisée des médias au sein d'une structure de lieux qui reste inchangée.

Le fichier ou l'ensemble de fichiers de configuration 300 peut être codé en un grand nombre de langage de programmation. De préférence, il est codé en Extensible Markup Language.

Le système 1 comprend également un dispositif 350 comportant des fichiers de média 360. Les fichiers de médias 360 peuvent par exemple être des images, des vidéo, des bandes son ou des diaporamas.

De préférence les fichiers de média 360 sont rassemblés au sein d'un même dossier, ce dossier pouvant comprendre des sous-dossiers.
De préférence, le fichier ou l'ensemble de fichiers de configuration 300 et le dispositif 350 sont localisés sur le même appareil qui peut être par exemple un appareil mobile, un serveur ou un ordinateur.

Les champs primaires 311, 321, 331, décrits précédemment, peuvent être associés à des éléments de données 400 qui définissent la valeur de ces champs primaires 311, 321, 331. Ces éléments de données 400 sont généralement des séquences de lettres et/ou de chiffres pouvant comporter des symboles et sont traités par le module de composition 100.

Le module de composition 100 de séquence d'expérience de réalité virtuelle 10 comprend un dispositif d'enregistrement 110 muni de règles lui permettant d'enregistrer, dans le fichier de configuration ou l'ensemble de fichiers de configuration 300, les éléments de données 400 et d'y accéder.

Ainsi, lors de la composition ou de la modification séquences d'expérience de réalité virtuelle 10, le module de composition 100 via le dispositif d'enregistrement 110 se connecte au(x) fichier(s) de configuration 300 et modifie les éléments de données 400 associés aux champs primaires et/ou secondaires. Il est configuré également pour enregistrer les éléments de données 400 dans le fichier de configuration ou l'ensemble de fichiers de configuration 300. Ces éléments de donnée 400 définissent au moins partiellement la séquence d'expérience de réalité virtuelle 10. Cette dernière étant principalement définie par les éléments de données 400 et les fichiers média. Ces éléments de données 400, enregistrés dans le fichier de configuration ou l'ensemble de fichiers de configuration 300 et associés aux champs primaires permettront au module de composition ainsi qu'au module de lecture de transférer au module d'affichage les informations nécessaires à l'affichage de la séquence d'expérience de réalité virtuelle et notamment des fichiers médias composant cette séquence d'expérience virtuelle.

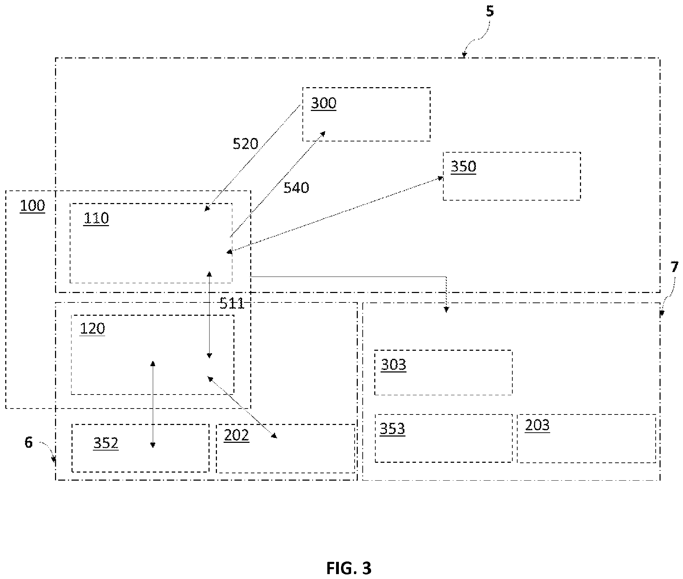

La figure 3 présente une vue schématique simplifiée d'un système de composition selon l'invention étant subdivisé en trois parties principales : un dispositif 5 comportant l'essentiel du système de composition 1 et pouvant être hébergé sur un site par exemple dans les locaux d'une société, un dispositif 6 dédié l'interaction entre le système 1 et un auteur ; un système 7 dédié à la lecture de la nouvelle séquence d'expérience de réalité virtuelle 10 créée par l'auteur.

De façon particulière, le module de composition 100 peut comprendre un dispositif d'enregistrement 110 situé sur le même appareil que le fichier ou l'ensemble de fichier de configuration 300 et un dispositif de commande 120 pouvant recevoir des instructions de la part d'un auteur et les transférer via un réseau au dispositif d'enregistrer 110. Cet agencement permet à l'invention de proposer une solution permettant le paramétrage d'une expérience de visite en réalité virtuelle sous la forme d'un service SAAS.

Par exemple, le module de composition 100 peut comprendre une application installée sur un appareil mobile (e.g. ordinateur portable, téléphone portable, tablette, casque de réalité virtuelle), sur un ordinateur ou sur un serveur. L'application peut être installée sur un téléphone via un fichier de type APK ou sur un ordinateur PC via un fichier de type exécutable. Le dispositif de commande 120 peut également, selon les instructions de l'auteur, transférer des fichiers médias depuis un dispositif de média 352 intégré au dispositif 6 vers le dispositif 5. Ces fichiers de médias peuvent par exemple être des images, des vidéo, des bandes son ou des diaporamas.

Le système de composition ou de modification 1 selon l'invention peut également comprendre un module d'affichage 202, intégré au dispositif 6, apte à recevoir et afficher des informations du module de composition 100 d'expérience de réalité virtuelle. Le module d'affichage 202 permet d'afficher une interface de création et/ou la séquence d'expérience de réalité virtuelle. Le module d'affichage 202 peut comporter un casque VR, une tablette ou un écran de bureau et une application exécutable configurée pour présenter une interface de création et/ou la séquence d'expérience de réalité virtuelle à l'auteur. L'interface de création, en combinaison avec l'interface de commande 120, permet à l'auteur de sélectionner les éléments de données pour les champs primaires et secondaires.

De façon particulière, le module de composition 100 peut ne pas être associé au même appareil que le fichier ou l'ensemble de fichiers de configuration 300 ou que le dispositif média 350. Par exemple, le module de composition 100 peut être associé à un appareil mobile alors que les fichiers de configuration 300 sont enregistrés sur un serveur distant.

Le dispositif 7 est par exemple un emplacement distant, comme une portion de serveur, un appareil mobile ou un casque de réalité virtuelle, dédié à la mise en œuvre de la séquence d'expérience de réalité virtuelle 20 en cours de modification ou création. Il peut comporter un fichier de configuration ou un ensemble de fichiers de configuration 303 dédiés à ladite séquence 20, un module d'affichage 203 spécifique du dispositif 7 et un dispositif de stockage 353 comportant des fichiers de média.

Selon un autre aspect, l'invention porte sur un procédé de composition ou de modification 2 d'une séquence d'expérience de réalité virtuelle 10. Ce procédé de composition permet à un non spécialiste de définir tous les éléments de la visite (lieux, liens de navigation, media consultables et leur positionnement dans chaque lieu) dans une interface avec laquelle il est possible d'interagir sans connaissances en programmation. C'est-à-dire que l'utilisateur à seulement besoin de sélectionner la forme de la séquence d'expérience de réalité virtuelle par exemple via un portail internet ou une application mobile dédiée dans une approche wysiwyg (« what you see is what you get » - « ce que vous voyez est ce que vous obtenez »). Le système de composition selon l'invention prendra en charge la construction des fichiers permettant la composition de cette séquence. Il est possible également grâce à ce procédé de venir greffer à une séquence initiale des contenus de tous types et cela sans connaissances en programmation.

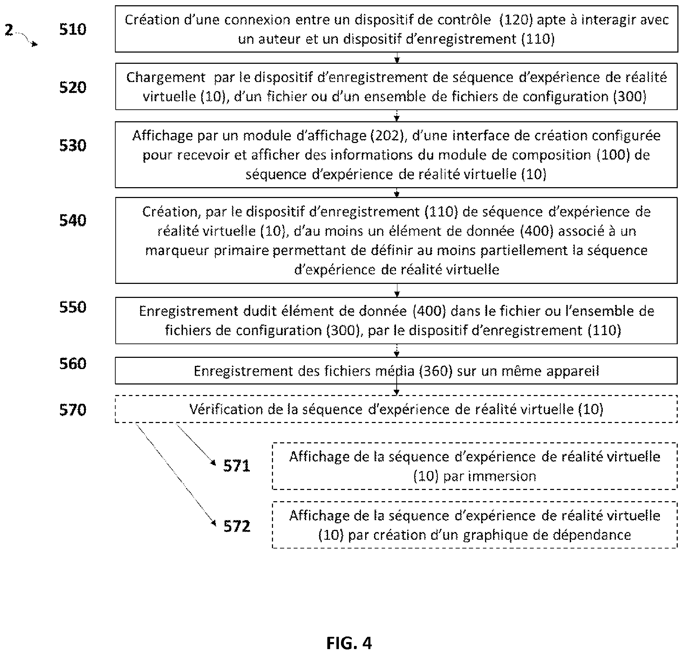

La figure 4 présente les étapes du procédé de composition ou de modification 2 d'une séquence d'expérience de réalité virtuelle 10 selon l'invention.

Le procédé de composition ou de modification 2 d'une séquence d'expérience de réalité virtuelle selon l'invention peut être mis en œuvre par le système décrit précédemment ou par tout autre système adapté. Un système adapté comprendra par exemple un module de composition 100 de séquence d'expérience de réalité virtuelle 10 incluant un dispositif de contrôle 120 apte à interagir avec un auteur, un fichier ou un ensemble de fichiers de configuration 300, un dispositif 350 de fichiers média. De préférence, le procédé de composition ou de modification 2 d'une séquence d'expérience de réalité virtuelle 10 selon l'invention est mis en œuvre par le système 1 décrit précédemment.

Le procédé comprend les étapes suivantes :
- Une étape 510 de création d'une connexion (511 sur figure 3) entre un dispositif de contrôle 120 apte à interagir avec un auteur et un dispositif d'enregistrement 110,
- Une étape 520 d'accès par le dispositif d'enregistrement 110, au fichier ou à l'ensemble de fichiers de configuration 300,
- Une étape 530 d'affichage par un module d'affichage 202, d'une interface de création configurée pour recevoir et afficher des informations du module de composition 100 de séquence d'expérience de réalité virtuelle 10,
- Une étape 540 de transmission au dispositif d'enregistrement 110, par le dispositif de contrôle 120, d'au moins un élément de donnée 400 associé à un marqueur primaire de scène 311, de navigation 321 et/ou de média 331, l'élément de donnée 400 associé à un marqueur primaire 311, 321, 331 permettant de définir au moins partiellement la séquence d'expérience de réalité virtuelle, et
- Une étape 550 d'enregistrement dudit élément de donnée 400 dans le fichier ou l'ensemble de fichiers de configuration 300, par le dispositif d'enregistrement 110 de séquence d'expérience de réalité virtuelle 10.

Lors de ce procédé, par exemple sur requête de l'auteur, une connexion sera mise en place entre un dispositif d'enregistrement 110 et un dispositif de contrôle 120. L'auteur pourra interagir avec le dispositif de contrôle 120 de façon à accéder via le dispositif d'enregistrement 110 au(x) fichiers de configuration(s) 300. Les dispositifs de contrôle 120 et d'enregistrement 110 font parties du module de composition 100 décrit précédemment.

Par l'intermédiaire d'un module d'affichage 200 ou 202 accessible à l'auteur, l'auteur pourra sélectionner au moins un élément de donnée 400 qui sera ensuite transmis au dispositif d'enregistrement 110, par le dispositif de contrôle 120. Cette sélection peut être réalisée par une application graphique comprise dans le module d'affichage 200,202. Cet ensemble module d'affichage 200, 202, dispositif de contrôle 120, dispositif d'enregistrement 110 permet à l'auteur de choisir les éléments de données 400 associés à plusieurs champs de la séquence telles que les fichiers médias d'environnement, de contenus et de transition. Ainsi, l'auteur a la possibilité de modifier les vues ainsi que les contenus accessibles lors de l'utilisation de la séquence d'expérience de réalité virtuelle. Or ces choix peuvent être implémentés sans connaissance en programmation. Ils sont par exemple rendu possibles par des listes de choix déroulant affichées par le module d'affichage 200,202, ou des fenêtres permettant de sélectionner des fichiers médias à inclure.

L'auteur peut également sélectionner des éléments de données 400 correspondant aux valeurs des autres champs primaires et secondaire tels que décrits précédemment. Ces éléments de données sont transmis au dispositif d'enregistrement 110, par le dispositif de contrôle 120. Le fichier ou l'ensemble de fichiers de configuration 300 décrit(s) dans cette partie correspond au fichier ou à l'ensemble de fichiers de configuration 300 décrit(s) précédemment.

Par exemple, il est possible pour l'auteur de sélectionner via le module d'affichage différents éléments de transition (e.g. scènes 2D3D, vidéo 2D, 3D 360, sons, contenus 2D fixes, Flux multimédias...) qui seront ensuite implémentés dans la séquence. Ainsi, le dispositif de contrôle accédera aux fichiers média de transition sélectionnés puis les transmettra au dispositif d'enregistrement 110 qui les enregistrera avec les autres fichiers médias. De même, les fichiers médias associés à la séquence peuvent provenir de plusieurs sources. Dans une étape particulière, l'ensemble des fichiers médias 360 sont enregistrés dans le dispositif média 350. De façon préférée, ces fichiers média centralisés peuvent ensuite être transférés aux utilisateurs.

De façon préférée, au cours du procédé de composition selon l'invention, le dispositif d'enregistrement 110 traite dans un premier temps les scènes et/ou les nœuds de navigation puis dans un second temps les nœuds de média. De façon particulière, les fichiers codant les applications mise en œuvre au sein du module de composition 100 ne sont pas modifiés lors de la composition ou la modification de l'expérience de réalité virtuelle.

De façon particulière, le dispositif de contrôle 120 peut accéder à des fichiers média 361 étant contenu sur l'appareil 6 de l'auteur. Ces fichiers média peuvent être transférés par le dispositif de contrôle 120 au dispositif d'enregistrement 110 de façon à les enregistrer par exemple sur un serveur 5. Au cours d'une autre étape, lorsque la séquence d'expérience de réalité virtuelle a été modifiée, le dispositif d'enregistrement 110 peut rassembler tous les fichiers média utilisés lors de la séquence d'expérience de réalité virtuelle et les enregistrer par exemple sur un appareil mobile 7 ou une pluralité d'appareils mobiles. Ainsi, le procédé peut comprendre en outre une étape 560 d'enregistrement sur un appareil mobile 7 des fichiers médias organisés 363 et/ou des fichiers de configuration 303 modifiés.

De façon particulière, l'auteur peut personnaliser la répétitivité d'une action liée à un nœud média.

De façon particulière, ce procédé peut également comprendre une étape d'envoi de la séquence d'expérience de réalité virtuelle 10 sous forme d'un fichier ou d'un ensemble de fichiers de configuration 300 et l'ensemble des medias 360 nécessaires sur un appareil mobile 7. L'appareil mobile 7 étant de préférence une tablette, un téléphone à écran tactile, ou encore un casque de réalité virtuelle.

Dans ce cas, de façon avantageuse, le procédé de composition 2 d'une séquence d'expérience de réalité virtuelle 10 comprendra une étape de vérification de la séquence d'expérience de réalité virtuelle obtenue.

De préférence, l'étape de vérification 570 de la séquence d'expérience de réalité virtuelle 10 comprend une étape d'affichage de la séquence de réalité virtuelle 10. Cet affichage, optionnel, peut se faire soit de façon immersive 571, c'est-à-dire que le module d'affichage affichera le contenu de la séquence par exemple comme si l'utilisateur était en train de naviguer dans la séquence d'expérience de réalité virtuelle ; soit de façon synoptique 572, c'est-à-dire que le module d'affichage affichera un graphique de dépendance représentant l'organisation de la séquence par exemple comme cela est présenté en figure 1.

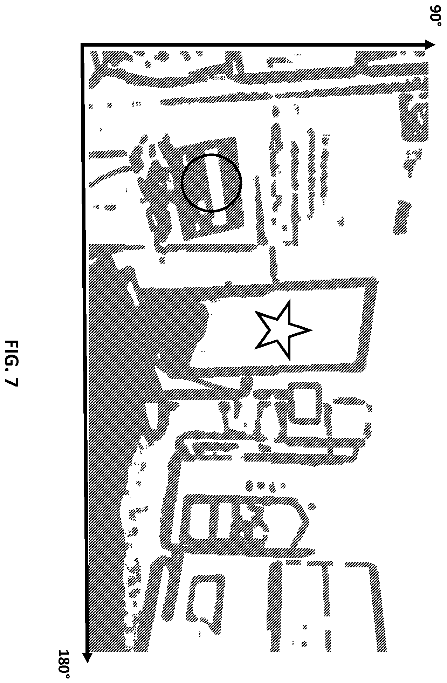

Dans le cas où l'affichage de la séquence est fait de façon immersive alors, de préférence tous les nœuds de navigation et de média seront affichés au sein de la vue. De préférence, ces deux types de nœuds seront représentés de façon différente afin de permettre à l'auteur de rapidement les différencier. Par exemple les nœuds de navigation pourront être représentés par des étoiles (cf. figure 7) tandis que les nœuds de média pourront être représentés par cercles (cf. Figure 7). Cette forme d'affichage à l'avantage de permettre à l'auteur de rapidement créer ou supprimer des nœuds de navigation et/ou de média ou de modifier les valeurs de leurs champs primaires et/ou secondaires tel que le champ position.

De plus, dans ce cas, la représentation des nœuds pourra être accompagnée de la représentation des valeurs des champs primaires ou des champs primaires et des champs secondaires de ces nœuds.

Dans le cas où l'affichage de la séquence est faite de façon synoptique, alors cette représentation peut prendre une forme similaire à celle de la figure 1 ; l'auteur peut ainsi cliquer sur les différents éléments de la représentation de façon à faire apparaitre des boites de dialogue lui donnant la possibilité de modifier les valeurs des champs primaire et/ou secondaires. Cette forme d'affichage à l'avantage de permettre de rapidement visualiser l'étendue de la séquence d'expérience et de procéder à des modifications de nœud de navigation.

De façon avantageuse, au cours du procédé de composition ou modification, les coordonnées de la souris selon le repère sphérique (O,x,y,z) de la vue sont affichées en permanence par le module d'affichage. Cela permet de positionner plus facilement les nœuds.

L'identifiant unique des nœuds peut également être affiché en permanence. Par ailleurs, les nœuds de média n'ayant pas de media associé ne sont pas représentés de la même façon que les nœuds de média ayant au moins un media associé. Cela peut également être appliqué de façon à différencier les nœuds de navigation liés ou non à une scène d'arrivée. Par exemple, un nœud de média n'ayant pas de fichier média associé peut être affiché en vert avec son identifiant. Ainsi, de préférence, lors de l'affichage de la séquence d'expérience de réalité virtuelle 10, le module de composition est apte à identifier les nœuds de navigation 320 ou les nœuds de média dont les champs primaires ne comportent pas d'éléments de données 400 associés.

Selon un autre aspect, l'invention porte sur un système de lecture 3 de la séquence d'expérience de réalité virtuelle 10. Ce système de lecture 3 repose sur l'utilisation d'un fichier ou d'un ensemble de fichier de configuration 300 tel que décrit précédemment. Il permet de proposer une solution légère, rapidement transférable à un ensemble d'utilisateurs et ne nécessitant pas de ressources trop importantes pour le dispositif mobile d'affichage.

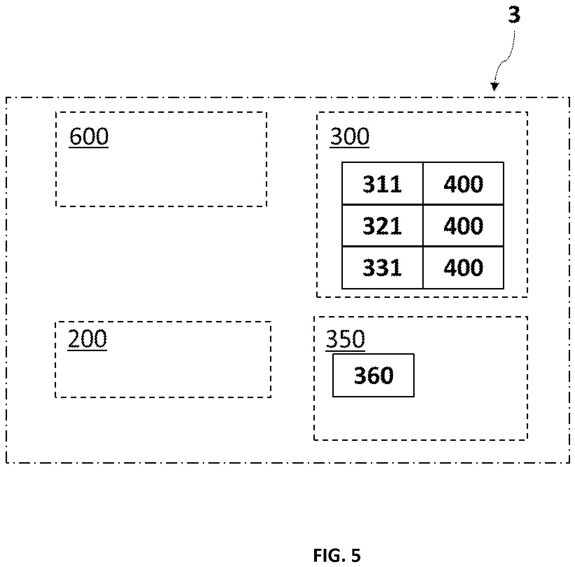

La figure 5 présente un système de lecture 3 d'une séquence d'expérience de réalité virtuelle selon l'invention.

Le système de lecture 3 d'une séquence d'expérience de réalité virtuelle 10 selon l'invention peut être mis en œuvre avec une séquence d'expérience de réalité virtuelle telle qu'obtenue par le procédé de composition ou de modification décrit ci-dessus ou avec tout autre séquence adaptée. La séquence adaptée reposera par exemple sur la présence d'un fichier ou ensemble de fichier de configuration 300 et d'un dispositif 350 comprenant des fichiers média 360 tels que décrits ci-dessus. De préférence, le système de lecture 3 d'une séquence d'expérience de réalité virtuelle selon l'invention est mis en œuvre sur une séquence d'expérience de réalité virtuelle telle qu'obtenue par le procédé de composition ou modification décrit ci-dessus.

Le système de lecture 3 comprend :
- Un module de lecture 600 de séquence d'expérience de réalité virtuelle 10,
- Un module d'affichage sur appareil mobile 203,
- Un fichier de configuration ou un ensemble de fichiers de configuration 300, et
- Un dispositif 350 comportant un ensemble de fichiers de média 360.

Le fichier de configuration ou l'ensemble de fichiers de configuration 300 ainsi que le dispositif 350 comportant un ensemble de fichiers de média 360 ont déjà été décrit ci-dessus et leurs caractéristiques particulières et préférées décrites précédemment sont également applicables au système de lecture 3 selon l'invention.

Le module de lecture 600 de séquence d'expérience de réalité virtuelle 10 comprenant un moyen d'accès 610 à des éléments de données 400, un dispositif d'acquisition et de traitement 620 des éléments de données 400 et un module de transmission 630 au module d'affichage 200. Le module de transmission 630 étant configuré pour transmettre au module d'affichage 200 la séquence d'expérience de réalité virtuelle 10 de façon à ce qu'elle soit visualisable par un ou plusieurs utilisateurs.

De façon particulière ce système peut comprendre un module d'identification 150 des utilisateurs du système de lecture 3 de la séquence d'expérience de réalité virtuelle 10. Il permet notamment une lecture multiutilisateurs de la séquence d'expérience de réalité virtuelle.

De façon particulière, ce système comprend un module de diffusion sur appareil mobiles de la séquence d'expérience de réalité virtuelle.

De façon particulière, le module de lecture 600 comprend une application installée sur un appareil mobile.

Le module de lecture 600 peut comprendre une application installée sur un appareil mobile au format exe, apk, ou ipa.

De façon particulière, le module d'affichage est apte à ne pas afficher les nœuds média en cas d'absence de fichier media associé.

Du point de vue de l'utilisateur (e.g. du visiteur), les actions disponibles sont représentées par des éléments visuels flottants dans le lieu qu'il est en train de visiter. Ces éléments visuels sont placés dynamiquement dans le lieu, sur la base du fichier ou de l'ensemble de fichiers de configuration 300. Les éléments visuels peuvent avoir une représentation visuelle différente en fonction de l'action ou du contenu qu'elles représentent, ainsi qu'un texte d'aide contextuelle. Lorsque son regard s'approche d'un nœud, un curseur apparaît pour l'aider à fixer précisément le point en question. Dès lors que son regard se trouve à proximité du point, un indicateur de temps apparaît près de la pastille pour montrer à l'utilisateur l'imminence du déclenchement de l'action. L'utilisateur choisit son action en fixant pendant un temps déterminé le point d'intérêt adéquat. L'action se déclenche automatiquement dès que le temps déterminé est écoulé, dès lors que l'utilisateur n'a pas détourné le regard. Un contenu textuel et/ou audio personnalisable est associé au point pour donner des informations lié au point. Pour voir ce texte, il n'y a pas besoin de cibler le point directement, car cela déclencherai la lecture, mais une zone invisible à l'utilisateur autour du point défini une surface dans laquelle le viseur du regard s'affiche, déclenche l'affichage du point d'intérêt et affiche le texte.

De préférence, le module d'affichage 203 est apte à afficher au moins un parcours recommandé. En l'absence d'un utilisateur guide cela permet à un utilisateur de suivre des indications apparaissance sur son champs de vision et ainsi être en mesure de suivre une séquence d'expérience de réalité virtuelle de façon optimisée.

En outre, de façon particulière, le module d'affichage 203 est apte à ne pas afficher les nœuds média en cas d'absence de fichier media associé.

Les procédés actuels de navigation au sein de séquences de réalité virtuelle repose sur la présence d'un pointeur représenté sur un écran d'affichage et correspondant à la position du regard de l'utilisateur au sein du champ de vision. L'utilisateur, peut orienter son regard de façon à modifier l'affichage et approcher des éléments de navigation visibles sur l'écran d'affichage puis il peut les activer. Partant de l'analyse des procédés et dispositifs de navigation existants et des problèmes existants, les inventeurs ont développé un nouveau dispositif de navigation dans des séquences d'expérience de réalité virtuelle et un nouveau procédé associé.

Dans les séquences d'expérience de réalité virtuelle, l'immersion et l'interaction sont deux paradigmes à optimiser afin de permettre à une ou plusieurs personnes d'interagir avec un mode virtuel à travers une interface lui donnant l'illusion de la réalité. Afin de renforcer le potentiel immersif d'une séquence d'expérience de réalité virtuelle, les inventeurs ont développé un nouveau dispositif et un procédé associé de façon à ce que la position du regard de l'utilisateur ne soit pas systématiquement représentée sur l'écran d'affichage. De même les objets avec lesquels l'utilisateur ne sont pas systématiquement représentés sur l'écran d'affichage.

Selon ce nouveau procédé, le pointeur représentant la position du regard de l'utilisateur n'est visible qu'à partir du moment où il est proche d'un objet avec lequel l'utilisateur peut interagir. De façon plus particulière, le pointeur apparait sur l'écran d'affichage seulement quand le pointeur est à une distance de l'objet le plus proche représentant moins de 10 %, de préférence moins de 5 % de la longueur du champ de vision. Selon un autre mode de réalisation, le pointeur apparait sur l'écran d'affichage seulement quand le pointeur est à une distance de l'objet le plus proche représentant moins de 10 %, de préférence moins de 5 % de la longueur de l'écran d'affichage.

La figure 7 représente un mode de réalisation de cet aspect de l'invention. Le fond gris indique le champ de vision 710. Le champ de vision comprend un nœud de navigation visible 721 et un nœud de média visible 731. Le pointeur 740 ne devient un pointeur visible 741 qu'à l'approche d'un point d'interaction tel qu'un nœud de navigation visible 721 ou un nœud de média visible 731.

Dans un autre mode de réalisation, le champ de vision comprend un nœud de navigation non visible 720 et un nœud de média non visible 730. Comme précédemment, le pointeur 740 ne devient un pointeur visible 741 qu'à l'approche d'un point d'interaction tel qu'un nœud de navigation non visible 720 ou un nœud de média non visible 730. De même, le nœud de navigation non visible 720 et le nœud de média non visible 730 deviennent des nœuds visibles 721, 731 avec l'approche du pointeur 740.

De façon avantageuse, à l'approche du pointeur 740, un texte relatif au contenu du nœud est affiché. Ce texte peut par exemple correspondre à l'élément de donnée 400 associé au champ secondaire 328.

De façon avantageuse, lorsque le pointeur est proche d'un nœud (e.g. à une distance correspondant à l'apparition du nœud), un compteur est affiché. Le compteur peut prendre différentes formes telles que par exemple un compte à rebours numérique, une aiguille parcourant un cadrant ou encore un cadrant s'effaçant autour d'un point. En effet, lorsque le nœud apparait, il est dit amorcé et si l'utilisateur maintient son regard à une distance suffisante du nœud pour qu'il reste visible alors au bout d'un temps nécessaire à l'activation pouvant être configuré, le nœud est activé et l'action associée au nœud est réalisée. Par exemple, le temps nécessaire à l'activation peut être de 1 seconde, 2 secondes, 3 secondes, 4 secondes ou 5 secondes.

De façon avantageuse, lorsque le pointeur est proche d'un nœud (e.g. à une distance correspondant à l'apparition du nœud), le module d'affichage est configuré pour faire apparaitre une forme d'activation 750 permettant de visualiser la zone permettant l'apparition du nœud ou son maintien. Cette forme peut par exemple être ellipsoïdale (e.g. circulaire, telle une pastille), carrée, rectangulaire. De préférence cette forme est ellipsoïdale et plus particulièrement carrée. De façon particulière, cette forme peut également correspondre à la forme de l'élément de la vue associé au nœud. Par exemple, si un nœud de navigation est positionné dans une vue au niveau de la représentation d'une porte alors la forme d'activation 750 correspond sensiblement à la forme de la porte dans la vue.

## Revendications

1. Système de composition ou de modification (1) d'une séquence d'expérience de réalité virtuelle (10), ladite séquence d'expérience de réalité virtuelle (10) comprenant d'une part plusieurs lieux (20) liés entre eux, une liaison entre deux lieux (20) étant opérée par un nœud de navigation (320), et d'autre part des contenus média (30) liés aux lieux (20), une liaison entre un lieu (20) et un contenu média (30) étant opérée par des nœuds de média (330), ledit système comprenant :
- un module de composition (100) de séquence d'expérience de réalité virtuelle (10),
- un fichier de configuration ou un ensemble de fichiers de configuration (300) comprenant :
∘ au moins une scène (310) **caractérisée par** des champs primaires de scène (311), lesdits champs primaires de scène (311) comprenant un identifiant unique de ladite scène (312) et un moyen d'accès (313) à un fichier média d'environnement (361) représentant un lieu (20),
∘ au moins un nœud de navigation (320) **caractérisé par** des champs primaires de navigation (321), lesdits champs primaires de navigation (321) comprenant un identifiant unique d'une scène de départ (322), un identifiant unique d'une scène d'arrivée (323), une position du nœud de navigation dans le lieu de la scène de départ selon un repère sphérique (O,x,y,z) (324) et une règle de transition (325),
∘ au moins un nœud de média (330) **caractérisé par** des champs primaires de média (331), lesdits champs primaires de média (331) comprenant un identifiant unique de la scène de laquelle dépend le nœud de média (332), une position du nœud de média dans le lieu de la scène comprenant le nœud de média selon un repère sphérique (O,x,y,z) (333), un chemin d'accès (334) à un fichier média de contenu (362) et une règle de contrôle (335), et
- un dispositif (350) comportant des fichiers de média (360),
lesdits champs primaires (311, 321, 331) étant associés à des éléments de données (400) définissant une valeur de ces champs primaires (311, 321, 331),
ledit module de composition (100) de séquence d'expérience de réalité virtuelle comprenant un dispositif d'enregistrement (110) muni de règles lui permettant d'enregistrer les éléments de données (400) dans le fichier de configuration ou l'ensemble de fichiers de configuration (300),
lesdits éléments de donnée (400) définissant au moins partiellement la séquence d'expérience de réalité virtuelle (10) composée ou modifiée.

2. Système selon la revendication 1, **caractérisé en ce que** chaque lieu (20) est représenté par des images 360 stéréo.

3. Système selon l'une des revendications 1 ou 2, **caractérisé en ce que** le ou les nœuds de navigation (320) sont **caractérisés en outre par** au moins un champ secondaire de navigation (326), ledit au moins un champ secondaire de navigation (326) pouvant être sélectionné parmi :
- un identifiant unique du nœud de navigation (327),
- un texte (328), donnant des informations relatives au nœud de navigation (320), et
- un moyen d'accès aux données relatives à la vue d'arrivée (329).

4. Système selon l'une des revendications précédentes, **caractérisé en ce que** le ou les nœuds de média (330) sont **caractérisés en outre par** au moins un champ secondaire de média (336), ledit champ secondaire de média (336) pouvant être sélectionné parmi :
- un identifiant unique du nœud de média (337),
- une valeur de distance (338), et
- une valeur permettant de contrôler le temps s'écoulant avant l'exécution du média (339).

5. Système selon l'une des revendications 1 à 4 **caractérisé en ce que** la séquence d'expérience de réalité virtuelle (10) est représentative d'un lieu réel et peut s'apparenter à une visite.

6. Système selon l'une des revendications 1 à 5 **caractérisé en ce que** l'élément de donnée (400) de la règle de contrôle (335) d'au moins un nœud de média (330) est sélectionné parmi un diaporama ou une grille de contenu, ledit diaporama ou ladite grille de contenu permettant l'accès à une pluralité de média en une seule action.

7. Système selon l'une des revendications 1 à 6 **caractérisé en ce que** le ou les fichiers de configuration ont une taille inférieure à 200 kilo-octets.

8. Système selon l'une des revendications 1 à 7 **caractérisé en ce que** le système comprend un ensemble de fichier de configuration dont au moins un fichier est un fichier de configuration organisateur comprenant une liste de l'ensemble des fichiers de configuration (300) nécessaires à la personnalisation de la séquence d'expérience de réalité virtuelle (10).

9. Système selon l'une des revendications 1 à 8 **caractérisé en ce que** le système comprend un ensemble de fichier de configuration comportant :
- un fichier de configuration dit organisateur (370),
- un fichier de configuration dit de scène, comprenant les scènes, les nœuds de navigation ainsi que pour les nœuds de média (330), les champs d'identifiant unique du nœud de média (337), d'identifiant unique de la scène de laquelle dépend le nœud de média (332), et de position du nœud de média dans le lieu de la scène comprenant le nœud de média selon un repère sphérique (O,x,y,z) (333),
- un fichier de configuration dit de média, comprenant les champs relatifs au chemin d'accès (334) à un fichier média de contenu (362), à une règle de contrôle (335), à un identifiant unique du nœud de média (337), à une valeur de distance (338), et à une valeur définissant l'exécution du média (339).

10. Procédé de composition ou de modification d'une séquence d'expérience de réalité virtuelle mis en œuvre par le système selon l'une des revendications 1 à 9, ladite séquence d'expérience de réalité virtuelle (20) comprenant d'une part des lieux (20) liés entre eux, une liaison entre deux lieux étant opérée par un nœud de navigation (320), et d'autre part des contenus média (30) liés aux lieux (20), une liaison entre un lieu et un contenu média étant opérée par des nœuds de média (330), ledit procédé comprenant :
- une étape (510) de création d'une connexion (511), dans un module de composition (100) de séquence d'expérience de réalité virtuelle (10), entre un dispositif de contrôle (120) apte à interagir avec un auteur et un dispositif d'enregistrement (110),
- une étape (520) de chargement par le dispositif d'enregistrement (110), d'un fichier ou d'un ensemble de fichiers de configuration (300), ledit fichier ou ensemble de fichiers de configuration (300) comprenant :
∘ au moins une scène (310) **caractérisée par** des champs primaires de scène (311), lesdits champs primaires de scène (311) comprenant un identifiant unique de ladite scène (312) et un moyen d'accès (313) à un fichier média d'environnement (361) représentant un lieu (20),
∘ au moins un nœud de navigation (320) **caractérisé par** des champs primaires de navigation (321), lesdits champs primaires de navigation (321) comprenant un identifiant unique d'une scène de départ (322), un identifiant unique d'une scène d'arrivée (323), une position du nœud de navigation dans le lieu de la scène de départ selon un repère sphérique (O,x,y,z) (324) et une règle de transition (325), et
∘ au moins un nœud de média (330) **caractérisé par** des champs primaires de média (331), lesdits champs primaires de média (331) comprenant un identifiant unique de la scène de laquelle dépend le nœud de média (332), une position du nœud de média dans le lieu de la scène comprenant le nœud de média selon un repère sphérique (O,x,y,z) (333), un chemin d'accès (334) à un fichier média de contenu (362) et une règle de contrôle (335),
lesdits champs primaires (311, 321, 331) pouvant être associés à des éléments de données (400) définissant la valeur de ces champs primaire (311, 321, 331),
- une étape (530) d'affichage par un module d'affichage (202), d'une interface de création configurée pour recevoir et afficher des informations du module de composition (100) de séquence d'expérience de réalité virtuelle (10),
- une étape (540) de création, par le dispositif d'enregistrement (110) de séquence d'expérience de réalité virtuelle, d'au moins un élément de donnée (400) associé à un marqueur primaire de scène (311), de navigation (321) et/ou de média (331), l'élément de donnée (400) associé à un marqueur primaire (311, 321, 331) permettant de définir au moins partiellement la séquence d'expérience de réalité virtuelle, et
- une étape (550) d'enregistrement dudit élément de donnée (400) dans le fichier ou l'ensemble de fichiers de configuration (300), par le dispositif d'enregistrement (110).

11. Système de lecture d'une expérience de réalité virtuelle susceptible d'être obtenue par le procédé selon la revendication 10, comprenant un dispositif d'affichage d'une expérience de réalité virtuelle, ladite expérience de réalité virtuelle comprenant d'une part des lieux liés entre eux, une liaison entre deux lieux étant opérée par un nœud de navigation, et d'autre part des contenus média liés aux lieux, une liaison entre un lieu et un contenu média étant opérée par des nœuds de média, ledit dispositif comprenant :
- un module de lecture d'expérience de réalité virtuelle (600),
- un module d'affichage (200),
- un fichier de configuration ou un ensemble de fichiers de configuration (300) comprenant :
∘ au moins une scène (310) **caractérisée par** des champs primaires de scène (311), lesdits champs primaires de scène (311) comprenant un identifiant unique de ladite scène (312) et un moyen d'accès (313) à un fichier média d'environnement (361) représentant un lieu (20),
∘ au moins un nœud de navigation (320) **caractérisé par** des champs primaires de navigation (321), lesdits champs primaires de navigation (321) comprenant un identifiant unique d'une scène de départ (322), un identifiant unique d'une scène d'arrivée (323), une position du nœud de navigation dans le lieu de la scène de départ selon un repère sphérique (O,x,y,z) (324) et une règle de transition (325), et
∘ au moins un nœud de média (330) **caractérisé par** des champs primaires de média (331), lesdits champs primaires de média (331) comprenant un identifiant unique de la scène de laquelle dépend le nœud de média (332), une position du nœud de média dans le lieu de la scène comprenant le nœud de média selon un repère sphérique (O,x,y,z) (333), un chemin d'accès (334) à un fichier média de contenu (362) et une règle de contrôle (335),
- un dispositif (350) comportant un ensemble de fichiers de média (360),
lesdits champs primaires (311, 321, 331) étant associés à des éléments de données (400) définissant la valeur de ces champs primaire (311, 321, 331),
ledit module de lecture (600) de séquence d'expérience de réalité virtuelle (10) comprenant un moyen d'accès (610) à des éléments de données (400), un dispositif d'acquisition et de traitement (620) des éléments de données (400) et un module de transmission (630) au module d'affichage (200) de la séquence d'expérience de réalité virtuelle (10).

12. Système de lecture selon la revendication 11 **caractérisé en ce qu'**il comprend un module d'identification (150) des utilisateurs du système de lecture de la séquence d'expérience de réalité virtuelle (10) apte à autoriser la lecture multiutilisateurs de la séquence d'expérience de réalité virtuelle.

13. Système de lecture selon l'une quelconque des revendications 11 à 12, **caractérisé en ce qu'**il est configuré de façon à ce que lorsque le regard de l'utilisateur est proche d'un nœud, un curseur apparaît pour l'aider à fixer précisément le point en question.

14. Système de lecture selon l'une quelconque des revendications 11 à 13, **caractérisé en ce qu'**il est configuré de façon à ce qu'un pointeur représentant la position du regard de l'utilisateur ne soit visible qu'à partir du moment où le pointeur est à une distance de l'objet le plus proche représentant moins de 10 % de la longueur du champ de vision.

15. Système de lecture selon l'une quelconque des revendications 11 à 14, **caractérisé en ce qu'**il est configuré de façon à ce que lorsque le regard de l'utilisateur est proche d'un nœud, un indicateur de temps apparaît pour indiquer à l'utilisateur l'imminence du déclenchement de l'action.

## Patentansprüche

1. System zur Erzeugung oder Veränderung (1) einer Experiencesequenz der virtuellen Realität (10), wobei die Experiencesequenz der virtuellen Realität (10) zum einen mehrere miteinander verbundene Orte (20) umfasst, wobei eine Verbindung zwischen zwei Orten (20) durch einen Navigationsknoten (320) hergestellt wird, und zum anderen Mediencontente (30), die mit den Orten (20) verbunden sind, wobei eine Verbindung zwischen einem Ort (20) und einem Mediencontent (30) durch Medienknoten (330) hergestellt wird, wobei das System umfasst:
- ein Modul zur Erzeugung (100) der Experiencesequenz der virtuellen Realität (10),
- eine Konfigurationsdatei oder eine Konfigurationsdateieinheit (300), umfassend:
o mindestens eine Szene (310), die durch primäre Szenenfelder (311) gekennzeichnet ist, wobei die primären Szenenfelder (311) ein einziges Kennwort der Szene (312) und ein Zugriffsmittel (313) auf eine Umfeldmediendatei (361) umfassen, die einen Ort (20) darstellt,
o mindestens einen Navigationsknoten (320), der durch primäre Navigationsfelder (321) gekennzeichnet ist, wobei die primären Navigationsfelder (321) ein einziges Kennwort einer Ausgangsszene (322), ein einziges Kennwort einer Ankunftsszene (323), eine Position des Navigationsknotens in dem Ort der Ausgangsszene gemäß einer sphärischen Bezugsmarke (O,x,y,z) (324) und eine Transitionsregel (325) umfassen,
o mindestens einen Medienknoten (330), der durch primäre Medienfelder (331) gekennzeichnet ist, wobei die primären Medienfelder (331) ein einziges Kennwort der Szene umfassen, von der der Medienknoten (332) abhängt, wobei eine Position des Medienknotens in dem Ort der Szene den Medienknoten gemäß einer sphärischen Bezugsmarke (O,x,y,z) (333), einem Zugriffsweg (334) auf eine Contentmediendatei (362) und einer Steuerregel (335) umfasst, und
- eine Vorrichtung (350), die Mediendateien (360) umfasst,
wobei die primären Felder (311, 321, 331) Datenelementen (400) zugeordnet sind, die einen Wert dieser primären Felder (311, 321, 331) definieren,
wobei das Modul zur Erzeugung (100) einer Experiencesequenz der virtuellen Realität eine Speichervorrichtung (110) umfasst, die mit Regeln ausgestattet ist, die es ihr ermöglichen, die Datenelemente (400) in der Konfigurationsdatei oder der Konfigurationsdateieinheit (300) zu speichern,
wobei die Datenelemente (400) die erzeugte oder veränderte Experiencesequenz der virtuellen Realität (10) mindestens teilweise definieren.

2. System nach Anspruch 1, **dadurch gekennzeichnet, dass** jeder Ort (20) durch Stereobilder 360 dargestellt ist.

3. System nach einem der Ansprüche 1 oder 2, **dadurch gekennzeichnet, dass** der oder die Navigationsknoten (320) ferner durch mindestens ein sekundäres Navigationsfeld (326) gekennzeichnet sind, wobei das mindestens eine sekundäre Navigationsfeld (326) ausgewählt sein kann aus:
- einem einzigen Kennwort des Navigationsknotens (327),
- einem Text (328), der Informationen gibt, die sich auf den Navigationsknoten (320) beziehen, und
- einem Zugriffsmittel auf die Datei, die sich auf die Ankunftsansicht (329) beziehen.

4. System nach einem der vorangehenden Ansprüche, **dadurch gekennzeichnet, dass** der oder die Medienknoten (330) ferner durch mindestens ein sekundäres Medienfeld (336) gekennzeichnet sind, wobei das sekundäre Medienfeld (336) ausgewählt sein kann aus:
- einem einzigen Kennwort des Medienknotens (337),
- einem Distanzwert (338), und
- einem Wert, der erlaubt, die Zeit zu steuern, die vor der Ausführung des Mediums (339) vergeht.

5. System nach einem der Ansprüche 1 bis 4, **dadurch gekennzeichnet, dass** die Experiencesequenz der virtuellen Realität (10) für einen realen Ort repräsentativ ist und einem Besuch ähneln kann.

6. System nach einem der Ansprüche 1 bis 5, **dadurch gekennzeichnet, dass** das Datenelement (400) der Steuerregel (335) mindestens eines Medienknotens (330) aus einer Tonbildschau oder einem Contentraster ausgewählt ist, wobei die Tonbildschau oder das Contentraster den Zugriff auf eine Vielzahl von Medien in einer einzigen Aktion erlauben.

7. System nach einem der Ansprüche 1 bis 6, **dadurch gekennzeichnet, dass** die Konfigurationsdatei(en) eine Größe unter 200 Kilobyte haben.

8. System nach einem der Ansprüche 1 bis 7, **dadurch gekennzeichnet, dass** das System eine Konfigurationsdateieinheit umfasst, wovon mindestens eine Datei eine Organisations-Konfigurationsdatei ist, die eine Liste der Konfigurationsdateieinheit (300) umfasst, die für die Personalisierung der Experiencesequenz der virtuellen Realität (10) notwendig sind.

9. System nach einem der Ansprüche 1 bis 8, **dadurch gekennzeichnet, dass** das System eine Konfigurationsdateieinheit umfasst, aufweisend:
- eine Organisations-Konfigurationsdatei (370),
- eine Szenen-Konfigurationsdatei, umfassend die Szenen, die Navigationsknoten sowie für die Medienknoten (330) die Felder des einzigen Kennworts des Medienknotens (337), des einzigen Kennworts der Szene, von der der Medienknoten (332) abhängt, und der Position des Medienknotens im Ort der Szene, der den Medienknoten gemäß einer sphärischen Bezugsmarke (O,x,y,z) (333) umfasst,
- eine Medien-Konfigurationsdatei, umfassend die Felder, die sich auf den Zugriffsweg (334) auf eine Contentmediendatei (362), auf eine Steuerregel (335), auf ein einziges Kennwort des Medienknotens (337), auf einen Distanzwert (338) und auf einen Wert zur Ausführung des Mediums (339) beziehen.

10. Verfahren zur Erzeugung oder Veränderung einer Experiencesequenz der virtuellen Realität, durchgeführt durch das System nach einem der Ansprüche 1 bis 9, wobei die Experiencesequenz der virtuellen Realität (20) zum einen miteinander verbundene Orte (20) umfasst, wobei eine Verbindung zwischen zwei Orten durch einen Navigationsknoten (320) hergestellt wird, und zum anderen Mediencontente (30), die mit den Orten (20) verbunden sind, wobei eine Verbindung zwischen einem Ort und einem Mediencontent durch Medienknoten (330) hergestellt wird, wobei das Verfahren umfasst:
- einen Schritt (510) der Herstellung einer Verbindung (511), in einem Modul zur Erzeugung (100) einer Experiencesequenz der virtuellen Realität (10), zwischen einer Steuervorrichtung (120), die imstande ist, mit einem Autor zu interagieren und einer Speichervorrichtung (110),
- einen Schritt (520) des Ladens, durch die Speichervorrichtung (110), einer Konfigurationsdatei oder einer Konfigurationsdateieinheit (300), wobei die Konfigurationsdatei oder Konfigurationsdateieinheit (300) umfasst:
∘ mindestens eine Szene (310), die durch primäre Szenenfelder (311) gekennzeichnet ist, wobei die primären Szenenfelder (311) ein einziges Kennwort der Szene (312) und ein Zugriffsmittel (313) auf eine Umfeldmediendatei (361) umfassen, die einen Ort (20) darstellt,
∘ mindestens einen Navigationsknoten (320), der durch primäre Navigationsfelder (321) gekennzeichnet ist, wobei die primären Navigationsfelder (321) ein einziges Kennwort einer Ausgangsszene (322), ein einziges Kennwort einer Ankunftsszene (323), eine Position des Navigationsknotens in dem Ort der Ausgangsszene gemäß einer sphärischen Bezugsmarke (O,x,y,z) (324) und eine Transitionsregel (325) umfassen, und
∘ mindestens einen Medienknoten (330), der durch primäre Medienfelder (331) gekennzeichnet ist, wobei die primären Medienfelder (331) ein einziges Kennwort der Szene umfassen, von der der Medienknoten (332) abhängt, wobei eine Position des Medienknotens in dem Ort der Szene den Medienknoten gemäß einer sphärischen Bezugsmarke (O,x,y,z) (333), einem Zugriffsweg (334) auf eine Contentmediendatei (362) und einer Steuerregel (335) umfasst,
wobei die primären Felder (311, 321, 331) Datenelementen (400) zugeordnet sein können, die den Wert diese primären Felder (311, 321, 331) definieren,
- einen Schritt (530) des Anzeigens, durch ein Anzeigemodul (202), einer Kreationsschnittstelle, die ausgelegt ist, um Informationen des Moduls zur Erzeugung (100) einer Experiencesequenz der virtuellen Realität (10) zu empfangen und anzuzeigen,
- einen Schritt (540) der Herstellung, durch die Speichervorrichtung (110) einer Experiencesequenz der virtuellen Realität, mindestens eines Datenelements (400), das einem primären Szenen- (311), Navigations- (321) und/oder Medienmarker (331) zugeordnet ist, wobei das einem primären Marker (311, 321, 331) zugeordnete Datenelement (400) erlaubt, die Experiencesequenz der virtuellen Realität mindestens teilweise zu definieren, und
- einen Schritt (550) des Speicherns des Datenelements (400) in der Konfigurationsdatei oder der Konfigurationsdateieinheit (300) durch die Speichervorrichtung (110) .

11. System zum Lesen einer Experience der virtuellen Realität, erhaltbar durch das Verfahren nach Anspruch 10, umfassend eine Anzeigevorrichtung einer Experience der virtuellen Realität, wobei die Experience der virtuellen Realität zum einen miteinander verbundene Orte umfasst, wobei eine Verbindung zwischen zwei Orten durch einen Navigationsknoten hergestellt wird, und zum anderen Mediencontente, die mit den Orten verbunden sind, wobei eine Verbindung zwischen einem Ort und einem Mediencontent durch Medienknoten hergestellt wird, wobei die Vorrichtung umfasst:
- ein Lesemodul einer Experience der virtuellen Realität (600),
- ein Anzeigemodul (200),
- eine Konfigurationsdatei oder eine Konfigurationsdateieinheit (300), umfassend:
∘ mindestens eine Szene (310), die durch primäre Szenenfelder (311) gekennzeichnet ist, wobei die primären Szenenfelder (311) ein einziges Kennwort der Szene (312) und ein Zugriffsmittel (313) auf eine Umfeldmediendatei (361) umfassen, die einen Ort (20) darstellt,
∘ mindestens einen Navigationsknoten (320), der durch primäre Navigationsfelder (321) gekennzeichnet ist, wobei die primären Navigationsfelder (321) ein einziges Kennwort einer Ausgangsszene (322), ein einziges Kennwort einer Ankunftsszene (323), eine Position des Navigationsknotens in dem Ort der Ausgangsszene gemäß einer sphärischen Bezugsmarke (O,x,y,z) (324) und eine Transitionsregel (325) umfassen, und
∘ mindestens einen Medienknoten (330), der durch primäre Medienfelder (331) gekennzeichnet ist, wobei die primären Medienfelder (331) ein einziges Kennwort der Szene umfassen, von der der Medienknoten (332) abhängt, wobei eine Position des Medienknotens in dem Ort der Szene den Medienknoten gemäß einer sphärischen Bezugsmarke (O,x,y,z) (333), einem Zugriffsweg (334) auf eine Contentmediendatei (362) und einer Steuerregel (335) umfasst,
- eine Vorrichtung (350), die eine Einheit von Mediendateien (360) umfasst,
wobei die primären Felder (311, 321, 331) Datenelementen (400) zugeordnet sind, die den Wert dieser primären Felder (311, 321, 331) definieren,
wobei das Lesemodul (600) der Experiencesequenz der virtuellen Realität (10) ein Zugriffsmittel (610) auf Datenelemente (400), eine Erfassungs- und Verarbeitungsvorrichtung (620) der Datenelemente (400) und ein Modul zur Übertragung (630) der Experiencesequenz der virtuellen Realität (10) an das Anzeigemodul (200) umfasst.

12. Lesesystem nach Anspruch 11, **dadurch gekennzeichnet, dass** es ein Identifikationsmodul (150) der User des Lesesystems der Experiencesequenz der virtuellen Realität (10) umfasst, das imstande ist, das Multiuser-Lesen der Experiencesequenz der virtuellen Realität zu gestatten.

13. Lesesystem nach einem der Ansprüche 11 bis 12, **dadurch gekennzeichnet, dass** es derart ausgelegt ist, dass, wenn der Blick des Users in der Nähe eines Knotens ist, ein Cursor erscheint, um ihm zu helfen, den fraglichen Punkt genau zu fixieren.

14. Lesesystem nach einem der Ansprüche 11 bis 13, **dadurch gekennzeichnet, dass** es derart ausgelegt ist, dass ein Pointer, die der Position des Blicks des Users darstellt, erst ab dem Moment zu sehen ist, wenn sich der Pointer in einem nächsten Abstand von dem Objekt befindet, der weniger als 10% der Länge des Sichtfeldes darstellt.

15. Lesesystem nach einem der Ansprüche 11 bis 14, **dadurch gekennzeichnet, dass** es derart ausgelegt ist, dass, wenn der Blick des Users in der Nähe eines Knotens ist, ein Zeitindikator erscheint, um dem User das bevorstehende.

## Claims

1. A system for composing or modifying (1) a virtual reality experience sequence (10), said virtual reality experience sequence (10) comprising on the one hand several locations (20) linked together, a link between two locations (20) being operated by a navigation node (320), and on the other hand media contents (30) linked to the locations (20), a link between a location (20) and a media content (30) being operated by media nodes (330), said system comprising:
- a module (100) for composing a virtual reality experience sequence (10),
- a configuration file or a set of configuration files (300) comprising:
∘ at least one scene (310) **characterized by** primary scene fields (311), said primary scene fields (311) comprising a unique identifier of said scene (312) and an access means (313) to an environment media file (361) representing a location (20),
∘ at least one navigation node (320) **characterized by** primary navigation fields (321), said primary navigation fields (321) comprising a unique identifier of a departure scene (322), a unique identifier of an arrival scene (323), a position of the navigation node in the location of the departure scene according to a spherical coordinate system (O, x, y, z) (324) and a transition rule (325),
∘ at least one media node (330) **characterized by** primary media fields (331), said primary media fields (331) comprising a unique identifier of the scene on which the media node (332) depends, a position of the media node in the scene location comprising the media node according to a spherical coordinate system (O, x, y, z) (333), an access path (334) to a content media file (362) and a control rule (335), and
- a device (350) including media files (360),
said primary fields (311, 321, 331) being associated with data elements (400) defining a value of these primary fields (311, 321, 331),
said module (100) for composing a virtual reality experience sequence comprising a recording device (110) provided with rules allowing it to record the data elements (400) in the configuration file or the set of configuration files (300),
said data elements (400) at least partially defining the composed or modified virtual reality experience sequence (10).

2. The system according to claim 1, **characterized in that** each location (20) is represented by 360 stereo images.

3. The system according to one of claims 1 or 2, **characterized in that** the navigation node(s) (320) are further **characterized by** at least one secondary navigation field (326), said at least one secondary navigation field (326) being able to be selected from:
- a unique identifier of the navigation node (327),
- a text (328), giving information relating to the navigation node (320), and
- an access means to the data relating to the arrival view (329).

4. The system according to one of the preceding claims, **characterized in that** the media node(s) (330) are further **characterized by** at least one secondary media field (336), said secondary media field (336) being able to be selected from:
- a unique identifier of the media node (337),
- a distance value (338), and
- a value allowing to control the time elapsing before the execution of the media (339).

5. The system according to one of claims 1 to 4 **characterized in that** the virtual reality experience sequence (10) is representative of a real location and can be connected to a visit.

6. The system according to one of claims 1 to 5 **characterized in that** the data element (400) of the control rule (335) of at least one media node (330) is selected from a slideshow or a content grid, said slideshow or said content grid allowing access to a plurality of media in a single action.

7. The system according to one of claims 1 to 6 **characterized in that** the configuration file(s) have a size less than 200 kilobytes.

8. The system according to one of claims 1 to 7 **characterized in that** the system comprises a set of configuration files at least one file of which is an organizer configuration file comprising a list of the set of the configuration files (300) necessary for customizing the virtual reality experience sequence (10).

9. The system according to one of claims 1 to 8 **characterized in that** the system comprises a set of configuration files including:
- a configuration file called organizer (370),
- a configuration file called scene file, comprising the scenes, the navigation nodes as well as for the media nodes (330), the fields of unique identifier of the media node (337), of unique identifier of the scene on which the media node (332) depends, and of the position of the media node in the scene location comprising the media node according to a spherical coordinate system (O, x, y, z) (333),
- a configuration file called media configuration file, comprising the fields relating to the access path (334) to a content media file (362), to a control rule (335), to a unique identifier of the media node (337), to a distance value (338), and to a value defining the execution of the media (339).

10. A method for composing or modifying a virtual reality experience sequence implemented by the system according to one of claims 1 to 9, said virtual reality experience sequence (20) comprising on the one hand locations (20) linked together, a link between two locations being operated by a navigation node (320), and on the other hand media contents (30) linked to the locations (20), a link between a location and a media content being operated by media nodes (330), said method comprising:
- a step (510) of creating a connection (511), in a module (100) for composing a virtual reality experience sequence (10), between a control device (120) capable of interacting with an author and a recording device (110),
- a step (520) of loading, by the recording device (110), a file or a set of configuration files (300), said file or set of configuration files (300) comprising:
∘ at least one scene (310) **characterized by** primary scene fields (311), said primary scene fields (311) comprising a unique identifier of said scene (312) and an access means (313) to an environment media file (361) representing a location (20),
∘ at least one navigation node (320) **characterized by** primary navigation fields (321), said primary navigation fields (321) comprising a unique identifier of a departure scene (322), a unique identifier of an arrival scene (323), a position of the navigation node in the location of the departure scene according to a spherical coordinate system (O, x, y, z) (324) and a transition rule (325), and
∘ at least one media node (330) **characterized by** primary media fields (331), said primary media fields (331) comprising a unique identifier of the scene on which the media node (332) depends, a position of the media node in the scene location comprising the media node according to a spherical coordinate system (O, x, y, z) (333), an access path (334) to a content media file (362) and a control rule (335),
said primary fields (311, 321, 331) being able to be associated with data elements (400) defining the value of these primary fields (311, 321, 331),
- a step (530) of displaying, by a display module (202), a creation interface configured to receive and display information from the module (100) for a composing virtual reality experience sequence (10),
- a step (540) of creating, by the device (110) for recording a virtual reality experience sequence, at least one data element (400) associated with a primary scene (311), navigation (321) and/or media (331) marker, the data element (400) associated with a primary marker (311, 321, 331) allowing to at least partially define the sequence of the virtual reality experience, and
- a step (550) of recording said data element (400) in the file or the set of configuration files (300), by the recording device (110).

11. A system for reading a virtual reality experience capable of being obtained by the method according to claim 10, comprising a device for displaying a virtual reality experience, said virtual reality experience comprising on the one hand locations linked together, a link between two locations being operated by a navigation node, and on the other hand media contents linked to the locations, a link between a location and a media content being operated by media nodes, said device comprising:
- a module (600) for reading virtual reality experience,
- a display module (200),
- a configuration file or a set of configuration files (300) comprising:
∘ at least one scene (310) **characterized by** primary scene fields (311), said primary scene fields (311) comprising a unique identifier of said scene (312) and an access means (313) to an environment media file (361) representing a location (20),
∘ at least one navigation node (320) **characterized by** primary navigation fields (321), said primary navigation fields (321) comprising a unique identifier of a departure scene (322), a unique identifier of an arrival scene (323), a position of the navigation node in the location of the departure scene according to a spherical coordinate system (O, x, y, z) (324) and a transition rule (325), and
∘ at least one media node (330) **characterized by** primary media fields (331), said primary media fields (331) comprising a unique identifier of the scene on which the media node (332) depends, a position of the media node in the scene location comprising the media node according to a spherical coordinate system (O, x, y, z) (333), an access path (334) to a content media file (362) and a control rule (335),
- a device (350) including a set of media files (360),
said primary fields (311, 321, 331) being associated with data elements (400) defining the value of these primary fields (311, 321, 331),
said module (600) for reading virtual reality experience sequence (10) comprising an access means (610) to data elements (400), a device for acquiring and processing (620) data elements (400) and a module (630) for transmitting the virtual reality experience sequence (10) to the display module (200).

12. The reading system according to claim 11 **characterized in that** it comprises a module (150) for identifying the users of the system for reading the virtual reality experience sequence (10) capable of authorizing multi-user reading of the virtual reality experience sequence.

13. The reading system according to any one of claims 11 to 12, **characterized in that** it is configured so that when the user's gaze is close to a node, a cursor appears to help him to precisely fix the point in question.

14. The reading system according to any one of claims 11 to 13, **characterized in that** it is configured so that a pointer representing the position of the user's gaze is only visible from the moment when the pointer is at a distance from the nearest object representing less than 10% of the length of the field of vision.

15. The reading system according to any one of claims 11 to 14, **characterized in that** it is configured so that when the user's gaze is close to a node, a time indicator appears to indicate to the user that the triggering of the action is imminent.
